(19) Europäisches Patentamt
European Patent Office
Office européen des brevets

(11) EP 1 234 357 B1

(12) **EUROPEAN PATENT SPECIFICATION**

(45) Date of publication and mention of the grant of the patent:
**05.01.2005 Bulletin 2005/01**

(21) Application number: **00977596.6**

(22) Date of filing: **29.11.2000**

(51) Int Cl.[7]: **H01S 3/06**, H01S 3/02, G02B 6/36, G02B 6/44

(86) International application number:
**PCT/EP2000/011937**

(87) International publication number:
**WO 2001/041263 (07.06.2001 Gazette 2001/23)**

(54) **OPTICAL DEVICE CONTAINING A FIBRE-OPTIC COMPONENT**

OPTISCHE VORRICHTUNG MIT EINER FASEROPTISCHEN KOMPONENTE

DISPOSITIF OPTIQUE COMPRENANT UN COMPOSANT A FIBRES OPTIQUES

(84) Designated Contracting States:
**DE FR GB IT**

(30) Priority: **30.11.1999 EP 99123719**
**03.12.1999 US 168632 P**

(43) Date of publication of application:
**28.08.2002 Bulletin 2002/35**

(73) Proprietor: **Corning O.T.I. S.r.l**
**20126 Milano (IT)**

(72) Inventors:
- **DELROSSO, Giovanni**
**I-20010 Sologno di Caltignaga (IT)**
- **DE DONNO, Marco**
**I-73024 Maglie (IT)**
- **SCARANO, Danilo**
**I-10143 Torino (IT)**

(74) Representative: **Giannesi, Simona**
**Porta, Checcacci & Associati S.p.A.**
**Via Trebbia, 20**
**20135 Milano (IT)**

(56) References cited:
**EP-A- 0 795 767**
**GB-A- 2 318 648**
**US-A- 4 953 939**
**US-A- 5 802 237**
**US-A- 5 848 213**
**US-A- 5 887 107**
**US-A- 5 915 061**
**US-A- 5 960 143**
**US-A- 5 987 207**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 234 357 B1

## Description

The present invention relates to optical devices containing fibre-optic components. In particular the present invention relates to the assembling and packaging of fibre-optic components.

For the purposes of the present invention, fibre-optic component means one or more optical fibres connected optically in some way, possessing characteristics (for example dimensions, constituent materials or dopants, types of coating, relative position of the fibres, values of the refractive index of the core and of the outer layers, etc.) chosen so as to transmit an input light beam to at least one output light beam according to a predetermined transfer function.

Examples of known components in fibre optics are: fibre Bragg gratings (fibre gratings), active fibres used for amplification of optical signals, fibre couplers, optical fibres in general (for example single-mode and multimode fibres), polarization-maintaining fibres, dispersion-shifted fibres, dispersion-compensating fibres, fibres used in optical sensors, etc.) as well as components obtained by combining them.

Fibre gratings are generally optical fibres that have, in one portion, a refractive index of the core n and/or of the cladding $n_c$ permanently modulated along the propagation axis of the fibre. Gratings reflect, according to various transfer functions, optical signals that have different wavelengths.

When the refractive index of the core n has a periodic (e.g. sinusoidal) variation with constant amplitude and pitch Λ along the propagation axis of the fibre, the grating is said to be uniform.

Apodized gratings have an amplitude of the refractive index of the core n that varies along the propagation axis of the fibre (e.g. according to a Gaussian profile), whereas chirped gratings have a pitch Λ that is variable along the propagation axis of the fibre.

In an article "Fiber Grating Spectra", Journal of Light Technology, Vol. 15, No. 8, p. 1277-1294, August 1997, T. Erdogan describes various types of fibre gratings and gives theoretical principles for their design and their possible uses in the area of optical telecommunications. The types of gratings considered by the author include, among others, the aforementioned uniform gratings, apodized gratings and chirped gratings.

It is known that in a digital optical transmission system the chromatic dispersion of an optical fibre, i.e. the different speed at which signals of different wavelengths travel, causes a degradation of the quality of transmission, which becomes more and more relevant as the quantity of information transmitted in unit time (bit rate) is increased.

Suitable chirped gratings, called dispersion-compensating gratings, abbreviated to DCG, are used for compensating chromatic dispersion.

A device for compensating chromatic dispersion is described in US patent 4953939. In this document, referring to Fig. 1, the compensator element 1 comprises a chirped grating 5 formed in a fibre and a directional coupler 6 which makes it possible to separate the travelling waves from the reflected waves. The directional coupler 6 can be a circulator, an isolator or a simple fused-fibre coupler. This compensating element produces an optical delay that varies with the wavelength of the transmitted signal so as to compensate the chromatic dispersion.

In this connection, the article by F. Ouellette, "Dispersion cancellation using linearly chirped Bragg grating filters in optical waveguides", Optic Letters, Vol. 12, No. 10, October 1987, describes the use of chirped gratings for cancelling dispersion in optical fibres.

Typically, a fibre grating is obtained by exposing the core of an optical fibre, from which the coating has been removed, to UV (ultraviolet) radiation that has a defined intensity distribution. The desired variation of the refractive index of the fibre n is obtained through the light refraction effect. Following the operation of inscribing the grating, the coating of the optical fibre is restored (recoating). Typically, the operation of recoating leads to an increase in overall diameter of the optical fibre relative to its diameter before the coating was removed. For example, this increase may be about 75 μm.

The fibre components and in general the optical devices that contain fibre components, such as devices for chromatic dispersion, are normally housed in units that protect the component and/or the device and limit its overall dimensions, permitting it to be transported.

Devices for compensation of chromatic dispersion, of the types comprising an optical circulator and a DCG, are housed in suitable modules such as those manufactured by the applicant and designated CDCM (Chromatic Dispersion Compensation Module), for example models CDC 0480 and CDC 016160.

US patent 5887107 describes an optical device consisting of a container, and an optical fibre containing, in one portion, a Bragg grating. The Bragg grating described is of the uniform type and is stated to be suitable for separating channels in a WDM system. In addition the container is provided with a locking element, which constrains a portion of the fibre, and a mandrel around which another portion of the fibre is wound.

The applicant has observed that, as shown in Fig. 2 of the said patent, the portion of fibre containing the grating is arranged between the mandrel and the locking element in a rectilinear position.

In US patent 5915061 in the name of the same applicant, an organizer rack is illustrated for the housing of fibre-optic components, electrical, opto-electrical and optical components, variously connected.

That document describes an optoelectronic apparatus that includes a casing, inside which are arranged an

electronic unit and an optical unit, connected electrically to one another; the optical unit comprises an element housing at least one component, which can be of the optical type, with optical connection or of the electro-optical type. The said element has a plurality of separate areas, so that each area houses components substantially of just one type.

This organizer rack includes, in addition, a holder for surplus fibres, provided with containment fins.

Patent application FR 2 561 002 describes a device for the storage of spare lengths of optical fibre, including a box with inlet and outlet holes. The interior of the box consists of a conduit in the form of a coil. Each coil communicates with a hole for fibre inlet. The device described permits withdrawal of the fibre inserted in the box by pulling it out, so as to be able to work on it.

US patent 5649035 describes a fibre-optic sensor for the measurement of stresses in structures such as towers, bridges, or aircraft parts. This sensor comprises a carrying layer of flexible material, an optical fibre formed into a plurality of loops and arranged on the carrying layer, and two reflecting elements arranged at the ends of the fibre. The optical fibre is embedded in the flexible carrying layer or is glued to it. The flexible carrying layer is applied to the structure that is to be measured. The elongation of the said structure between the two reflecting elements is observed by measuring, with an optical signal passing through the said fibre, the changes in the travel time due to the elongation of the optical fibre.

The use of fillers or adhesives inside known optical devices is also known.

For example, US patent 5727105 describes a device comprising a main container and two side containers, with an optical fibre that is introduced from the side container into the main container. The optical fibre is locked in the side container by means of silicone resin or an epoxy adhesive.

In addition, US patent 5960143, which relates to a protective casing of an optical component, describes the use of an adhesive product for fixing an optical fibre to a waveguide and for mechanically fixing an optical fibre to a substrate. This patent also describes the use of a water-repellent lubricating product, for example of the so-called mechanical type or silicone-based, for separating the optical component from the container walls.

In the reference book "Silicones - Chemistry and Technology" s.v., published by Vulkan-Veriag Essen (DE), 1991, p. 45-59, there is a description of the preparation of room temperature vulcanizable (RTV) silicone elastomers (or rubbers). The RTV silicone rubbers are divided in this book into single-component silicone rubbers (RTV-1) and two-component silicone rubbers (RTV-2). The latter, as described in the aforementioned book, can be produced by a reaction of condensation between two silicone compounds (for example between a polymethyldisiloxane with -OH end groups and tetra-ester of silicic acid) or by an addition reaction between two silicone compounds (for example by a reaction of hydrosilation of a silicone compound containing ≡SiH groups along the chain with a polydimethylsiloxane containing vinylic groups, either terminal or pendent along the chain).

For the purposes of the present invention the term "winding" of a fibre-optic component means a portion of such a component that has a curved shape, i.e. not rectilinear, for a substantial section of its length and arranged openly, i.e. in such a way that there is no contact between different points of the same winding.

For the purposes of the present invention, the expression fibre-optic component arranged in a wound configuration means that the fibre-optic component is arranged as a plurality of windings.

The applicant has observed that fibre-optic components, arranged in the known housing units and possessing a length such that they are required to be wound around suitable structures, undergo undesirable changes of their optical behaviour, occurring either during placing of the component around the said structure or during normal use of the said component.

The applicant has realized that some changes in optical behaviour of the fibre-optic component are connected with contact between different portions of the component itself. This can be explained by the fact that these contacts can cause, surprisingly, mechanical stressing of the fibre-optic component that is not negligible in its magnitude, i.e. is such as to alter the said behaviour.

In particular, the applicant has noticed that contacts through direct superposition between portions of the fibre component cause mechanical stresses of a greater magnitude relative to contacts occurring between tangent portions, i.e. between portions that remain parallel as they come into contact.

Furthermore, during its use, the component may be displaced relative to the position in which it was initially placed in the housing unit, giving rise to mechanical stresses due to contact between the portions of the optical fibre. Consequently, the optical behaviour of the fibre-optic component changes during the life of the said component.

The applicant has developed an optical device, inside which a fibre-optic component is arranged, wound-up so as to give it a stable position that prevents contact through direct superposition, and preferably any kind of contact, between different portions of the windings. This arrangement of the optical component makes it possible to avoid undesirable changes of behaviour of the said fibre-optic component.

According to a first aspect, the present invention according to claim 1 relates to an optical device comprising:

- a fibre-optic component associated with a predetermined transfer function and capable of being arranged in a plurality of adjacent windings; and

- a rigid housing capable of containing said fibre-optic component;

characterized in that said housing comprises:

- at least one separating element capable of physically separating the windings of said plurality of adjacent windings so as to avoid contacts through superposition therebetween;
- an element for fixing said fibre-optic component, said fixing element being capable of holding said fibre-optic component in a stable position.

In a preferred embodiment, said separating element is capable of separating the windings of said plurality of adjacent windings so as to prevent contacts therebetween.

In a particular embodiment, said fibre-optic component comprises, in one portion thereof, a component selected from the group comprising: a fibre grating, a chirped fibre grating.

In an alternative embodiment, said fibre-optic component comprises a component selected from the group comprising: a chromatic dispersion compensator, an active fibre.

Advantageously, said fibre-optic component has a length between 10 cm and 20 m.

Advantageously, said fibre-optic component has a length between 20 cm and 20 m.

In a particular embodiment, said rigid housing is made of a material selected from the group comprising: polycarbonate, a material containing an aluminium alloy.

In a particular embodiment, said housing comprises fins capable of delineating a circuit for housing said fibre-optic component.

In an alternative embodiment, said housing comprises grooves.

In a preferred embodiment, said separating element comprises at least one fin interposed between two windings of said plurality of adjacent windings.

In an alternative embodiment, said separating element comprises crosslinkable resins.

In a particular embodiment, said fixing element is selected from the group comprising: a sealing grease, a silicone compound, a polyurethane resin.

In an alternative embodiment, said fixing element is a cover structurally associated to said housing.

A second aspect of, the invention relates to an optical apparatus as defined in claim 14 comprising a container, inside which the following are arranged:

- an optical device as defined above; and
- an optical component capable of being connected to said fibre-optic component.

In a particular embodiment, said optical component comprises a connecting optical fibre.

Advantageously, said container comprises a unit for connecting said fibre-optic component to said connecting optical fibre of the optical component.

In a preferred embodiment, the fibre-optic component is selected from the group comprising: a fibre-optic grating, an active optical fibre.

In a particular embodiment, said optical component is selected from the group comprising an optical circulator, an optical isolator, an optical coupler.

A third aspect of the invention relates to method for assembling an optical device as defined in claim 19 comprising a fibre-optic component associated with a predetermined transfer function, said method comprising the steps of:

- placing said fibre-optic component inside a rigid housing in a wound-up configuration so as to avoid superposition between the various parts of the component; and
- locking, by means of a fixing element, said fibre-optic component in said configuration so as to prevent movements inside the housing.

Advantageously, the fibre-optic component is placed in a configuration which avoids contacts between the various parts of the fibre-optic component.

In a preferred embodiment of the method, said fibre-optic component is placed in a spiral configuration.

Advantageously, said spiral configuration has a pitch greater than or equal to the maximum diameter of the fibre-optic component.

In a particular embodiment, said spiral configuration has a pitch approximately equal to 1.5 times the maximum diameter of said fibre-optic component.

Advantageously, said locking step includes a step of inserting a quantity of a protective compound in said

housing.

In a particular embodiment, said transfer function is associated with a predetermined reflectivity spectrum.

Advantageously, in said step of placing the fibre-optic component inside the housing, said reflectivity spectrum undergoes a change of less than 0.5 dB.

Advantageously, in said step of placing the fibre-optic component inside the housing, said reflectivity spectrum undergoes a change of less than 0.2 dB.

The present invention makes the operation of placing the fibre-optic component in the relevant housing unit less critical.

In addition, it makes it possible to obtain reliable optical devices, possessing an effective transfer characteristic that is substantially equal to the nominal characteristic, reducing the operations of characterization and inspection that must be effected on the device during its life.

The optical device that is proposed can easily be coupled to other optical and optoelectronic devices and can be used as a discrete component, independently of the components to which it is connected.

The characteristics and advantages of the invention will be illustrated in the following, with reference to embodiments that are represented as non-limitative examples, in the accompanying drawings in which:

- Fig. 1 shows a plan view of an optical device according to the invention;
- Fig. 2 shows a plan view of an alternative embodiment of an optical device according to the invention;
- Figs. 3a and 3b show schematic representations of two chromatic dispersion compensators;
- Fig. 4 shows an exploded perspective view of a container made according to the invention, capable of containing two devices for compensation of chromatic dispersion;
- Fig. 5a shows a perspective view of the lower rack of the container in Fig. 4;
- Fig. 5b shows a perspective view of the intermediate rack of the container in Fig. 4;
- Fig. 5c shows the organizer rack of the container in Fig. 4;
- Fig. 6 shows a plan view of a container of a chromatic dispersion compensator made according to the known art;
- Fig. 7a shows the measured reflectivity spectrum of an extended chirped grating;
- Fig. 7b shows a first measured reflectivity spectrum of a chirped grating housed in the container of Fig. 7;
- Fig. 7c shows a second measured reflectivity spectrum of a chirped grating housed in the container of Fig. 6;
- Fig. 8 shows the reflectivity spectra of a chirped grating extended on a test bench, housed in the container in Fig. 6 and housed in the device of the invention;
- Fig. 9 shows an FTIR (Fourier transform infrared spectroscopy) analysis of the crosslinking of a silicone rubber used in the optical device of Fig. 1.

A preferred embodiment, given as a non-limitative example, of the optical device 100 according to the invention comprises a base 101, shown in detail in Fig. 1, a fibre-optic component 200, housed in base 101, and a cover (not shown) associated to the base 101.

The fibre-optic component 200 comprises an optical fibre that has an initial section 201 followed by a central portion in which there is a chirped grating 202 that extends over nearly the whole of its length, and a final section 203.

Base 101, of substantially rectangular external shape, perforated in its central part, contains semicircular peripheral notches 102, for joining to external elements, two inlet openings 103 and two optional outlet openings 104 arranged at the corners of base 101.

Base 101 supports the fibre-optic component 200 and protects it against external mechanical stresses, therefore it is sufficiently rigid to offer adequate resistance to the action of external mechanical forces that tend to deform it.

Advantageously, base 101 is an almost monolithic element made from materials with high dimensional stability, for example polycarbonate, preferably with glass fibres (e.g. to 40%), glass-filled nylon (e.g. nylon 66), or aluminium and aluminium-based (super) light alloys (e.g. Avional, Ergal, Peraiuman).

In addition, the base 101 is provided with holes 105 and holes 106 used respectively for the passage of screws for fixing the container to an external surface and as indicators for aligning the cover.

Each inlet opening 103 is connected, by means of a connecting slot 107, to a housing circuit 108 for the fibre-optic component 200, made in base 101.

This housing circuit 108 is preferably made by milling the base 101.

The connecting slot 107 comprises a notch 110 suitable for holding materials for fixing the initial section 201 of the fibre-optic component 200, such as rubber, plastics or glue.

The housing circuit 108 comprises a pathway for the fibre-optic component 200 and is delimited by arc-shaped fins 109. Fig. 1 shows two groups of opposing arc-shaped fins 109 and two separating zones 114 between these groups.

In each of the two groups, the arc-shaped fins 109 are arranged along concentric circumferences with increasing radius.

In particular, the housing circuit 108 for the fibre-optic component 200 shown in Fig. 1 is able to house the

said component following a spiral profile.

Preferably, the distance between adjacent fins 109 is a little greater than the maximum diameter of the fibre-optic component 200 in order to house it without exerting pressure on its walls and, at the same time, reduce its mobility within the housing circuit 108.

When outlet 104 is provided, base 101 has a groove 111 connected to the said outlet.

This groove 111 is also connected to the housing circuit 108 and, in the part close to the opening 104, is raised relative to the plane of the housing circuit 108.

In this terminal part, each groove 111 comprises wells 112, to hold, if necessary, glue or some other conventional material for locking the end 203 of the fibre-optic component 200 in the case when this end goes out of the device, as shown in Fig. 2, and raised portions 113 which act as bases for supporting the cover.

The cover, which provides further protection for the fibre-optic component 200, is typically made of a semirigid plastics material, for example polycarbonate, with thickness preferably of 0.7 mm which, being easily printed on by the silk-screen process, also serves as a label. It is also possible to use covers made of stainless-steel sheet, typically of 0.3 mm.

The said cover can be of the self-adhesive type and adheres to the base 101 in those regions not occupied by the fibre-optic component 200.

According to the optical device shown in Fig. 1, the chirped grating 202 is of the DCG type (Dispersion Compensating Grating), used for compensating chromatic dispersion.

A chirped grating of the DCG type is, for example, manufactured by the applicant.

The optical device 100 is suitable for housing fibre-optic components 200 of any length, preferably between about 10 cm and about 20 m. More preferably, between about 20 cm and about 20 m.

In particular, a fibre chirped grating housed in the said device will preferably have a length greater than 10 cm. More preferably the said length is greater than 20 cm and typically does not exceed 10 m.

According to a preferred embodiment, the length of the chirped grating is about 2 m. In this last case the fibre-optic component 200 has a total length of about 3.4 m with each of the terminal portions 201 and 203 having a length of about 70 cm.

The central portion of fibre-optic component 200, which includes the chirped grating 202, can in its turn contain several fibres in which a chirped grating is inscribed, connected optically by means of one of the known welding techniques.

Preferably, the cylindrical casing (called tube) for protecting the weld, which has a reduced occupied space, is made by conventional techniques that employ, for example, a heat-shrinkable tube, such as that marketed by OPTOTEC S.p.A. (Italy).

The final section 203 of fibre-optic component 200 can be provided with an antireflective termination obtained by known techniques such as tapering, antireflective coating, and the like.

As shown in Fig. 1, fibre-optic component 200 is placed carefully between fins 109 so as to follow the spiral shape of the housing circuit 108. The initial section 201 is inserted via inlet 103 into the connecting groove 107, while the chirped grating 202 evolves in housing circuit 108, clockwise, as far as the innermost coil where the final section 203 is placed. The initial section 201 is fixed to base 101 by means of a material contained in well 110, so as to prevent axial pulling arising from external sections of fibre being transmitted to the internal sections of fibre of the fibre-optic component 200.

This material is, for example, an elastomeric material such as silicone elastomer which secures the initial section 201 to the base 101 and which at the same time exerts a reduced pressure on the fibre in question, without affecting its optical behaviour.

Alternatively, for this specific application, it is possible to use commercial products such as LUXTRAK 4047 or 4057 ABLESTIK (Rancho Dominguez, CA90221).

The spiral along which the fibre-optic component 200 evolves, corresponds substantially to an Archimedes spiral, having a centre of evolution that coincides substantially with the point of intersection of the diagonals of base 101.

The radius of the innermost coil correponds to a curvature such that the chirped grating 202 is not damaged and its behaviour is not disturbed.

The distance between the axes of the sections of fibre of fibre-optic component 200 arranged along adjacent coils, i.e. the pitch $\Delta R$ of the spiral, is greater than or equal to the maximum diameter of fibre-optic component 200 and is constant for the entire evolution of the spiral.

For example, a suitable value of the pitch $\Delta R$ is $\Delta R = 1.5\ d$, where $d$ is the diameter of the fibre-optic component 200 including the recoating zone.

In addition, base 101 is suitable for housing a fibre-optic component 200 in which both its ends emerge from device 100 so as to be available for external connections.

Fig. 2 shows the base 101, and the fibre-optic component 200 arranged so that the final section 203 goes out through the appropriate opening 104. This final section 203 is fixed to groove 111 by means of a suitable locking

material placed in wells 112.

As stated previously, the part of groove 111 containing the wells 112 is raised relative to the housing circuit 108. Accordingly, the final section 203 that extends from the innermost coil of the housing circuit 108 to the groove 111 is inclined relative to the plane of the base 101. This inclination means that fibre section 203 is not in contact with the portions of the fibre-optic component 200 arranged in the housing circuit 108.

The applicant has observed that the housing circuit 108, described above, prevents the occurrence of contacts between adjacent sections of fibre-optic component 200, these sections being coplanar or sections that are superimposed. More generally, the housing circuit 108 makes it possible to avoid contact between all the various parts of fibre-optic component 200.

In the regions of housing circuit 108 that do not have fins, the fibre-optic component 200 is arranged so as not to have surplus fibre that occupies the region and comes into contact with other sections of fibre.

The arc-shaped fins 109 give the fibre-optic component 200 a predetermined profile and also separate the fibre sections corresponding to successive coils.

The spiral profile is particularly advantageous in that, in addition to the advantages described above, it makes it possible to optimize the overall dimensions of the optical device.

In addition to the arc-shaped fins 109, other elements can also be made or inserted in base 101 for conferring a defined placement profile and/or for separating sections of the fibre-optic component 200, so that they do not come into contact.

Other separating elements are, for example, fins of whatever shape, grooves, crosslinkable resins arranged on base 101 with suitable geometry, for example in a spiral, or obtained by photolithographic processes or a combination of these.

In addition, the fibre-optic component 200 arranged in the housing circuit 108 is immersed in a protective compound (not shown in the drawings).

This compound can be a silicone or non-silicone sealing grease of a known type, such as a grease used in fibre-optic cables, for example the silicone sealing grease Filler H55-Pirelli or the silicone grease LA444 marketed by HUBER.

In addition, this compound can be a resin that is crosslinkable at room temperature, for example a polyurethane resin.

Preferably, the said protective compound is a silicone composition.

A suitable silicone composition is characterized by the fact that when it is subjected to thermal ageing for 15 days at 100°C, it evolves a quantity of hydrogen less than 1 $cm^3$ per kg of silicone rubber. Preferably, the quantity is less than about 0.5 $cm^3$/kg, and even more preferably it is less than about 0.1 $cm^3$/kg of crosslinked material. Especially advantageous are those silicone rubbers according to the invention that evolve a quantity of hydrogen less than about 0.05 $cm^3$/kg of material.

The said characteristic can be obtained by properly controlling the stoichiometric proportions of the hydrogen-siloxane and vinyl-siloxane compounds used in the reaction of hydrosilation to obtain the said rubber, in particular carrying out the reaction with a stoichiometric ratio of 1:1 between the ≡SiH and vinyl functional groups, or with a stoichiometric deficit of ≡SiH groups.

The applicant has observed that if the aforesaid reaction of hydrosilation is carried out in accordance with what is suggested by the state of the art to optimize the physical properties of the resins, i.e. with a stoichiometric excess of 1.5 to 2 times groups relative to the vinyl groups, the presence of the excess of unreacted hydrogen-siloxane compound in the silicone mixture can cause the formation of hydrogen through reaction of the excess hydrogen-siloxane groups with water, according to the reaction scheme:

$$\equiv SiH + H_2O \rightarrow \equiv SiOH + H_2.$$

However, substantially complete reaction of the groups makes it possible to obtain a rubber that is substantially free of the said unreacted hydrogen-siloxane compounds, thereby avoiding the harmful possible formation of hydrogen as a result of their decomposition by reaching with water.

Fig. 9 shows the progress of crosslinking of a silicone rubber where the ratio between the ≡SiH groups and vinyl groups of the polysiloxane reactants is about 1:1 (prepared in accordance with Example 3 described below). This graph shows FTIR spectroscopic analysis of the various stages of crosslinking of the resin, starting from mixing of the components (line "A"), with particular reference to IR absorption of the 2155 $cm^{-1}$ band relating to the ≡SiH group. As can be seen from the graph, this band decreases in intensity considerably just one hour after mixing the components (line "B"), becoming practically negligible after about 4 hours (line "C").

The applicant has also observed that for generation of less than 1 $cm^3$ of hydrogen per kg of material, it is necessary for the final silicone rubber to contain a residue of unreacted ≡SiH groups less than 0.045 mmol per kg of

material.

An elastomer according to the present invention can therefore be obtained by an addition-curing reaction of a polysiloxane, preferably a polydimethylsiloxane containing at least two hydrogen-siloxane functional groups of formula >SiH-O- ("hydrogen-siloxane" for short) with a polysiloxane, preferably a polydimethylsiloxane, containing at least two vinyl groups of formula $-CH=CH_2$ ("vinyl-siloxane" for short), with the ratio between the molar quantity of hydrogen-siloxane groups and the molar quantity of vinyl groups less than or equal to 1:1. In particular, the ratio between the molar quantity of hydrogen-siloxane groups and the molar quantity of vinyl groups is between about 1:1 and about 0.5:1, preferably between about 0.9:1 and about 0.7:1, with a ratio of about 0.8:1 being especially preferred.

As polysiloxane containing hydrogen-siloxane groups, for the purposes of the present invention a compound of formula (I) can be used advantageously (I):

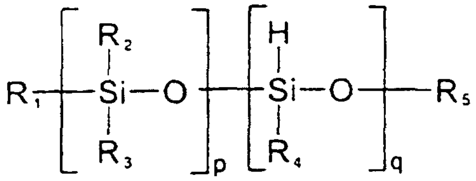

(I)

where $R_1$, $R_2$, $R_3$, $R_4$, and $R_5$, independently of one another, represent a ($C_1$-$C_4$) alkyl group, a ($C_5$-$C_8$) cycloalkyl group or a phenyl group, preferably a methyl group, p is an integer between about 30 and about 200, and preferably between about 50 and about 120, and q is an integer between about 5 and about 40, and preferably between about 10 and about 25. Preferably, the ratio between units of type $-HSiR_4-O-$ and units of type $-Si(R_2R_3)-O-$ is between about 1:1 and about 1:10, preferably being between about 1:3 and about 1:5. Preferably, the quantity of ≡SiH groups is between about 1 mmol per gram of compound and about 10 mmol per gram of compound of formula (I).

Advantageously, a polysiloxane containing hydrogen-siloxane groups according to the present invention, and in particular a compound of formula (I) where $R_1$, $R_2$, $R_3$, $R_4$, and $R_5$ are methyl, has a kinematic viscosity (at 25°C) between about 10 and about 600 mPas, preferably between 20 mPas and 400 mPas, with a viscosity of about 25 and 250 mPas (measured according to standard ASTM 445) being especially preferred.

Examples of polysiloxane compounds containing hydrogen-siloxane groups that can be used in the present composition are sold under the trademarks Silopren U130, Silopren U230, Silopren U430, Silopren U930 (Bayer AG), PS122.5, PS123, PS123.5, PS123.8, PS124.5, PS125, PS125.5, PS129.5 (United Chemical Technologies).

Among the vinyl-terminated polysiloxane compounds, for the purposes of the present invention, compounds of formula (II) can be used advantageously:

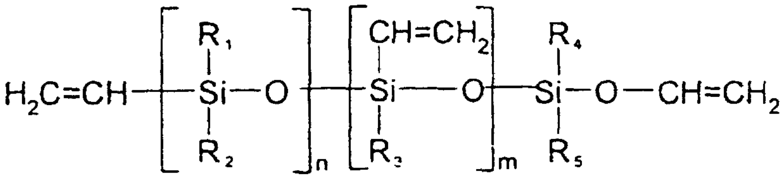

(II)

where $R_1$, $R_2$, $R_3$, $R_4$, and $R_5$, independently of one another, represent a ($C_1$-$C_4$) alkyl group, a ($C_5$-$C_8$) cycloalkyl group or a phenyl group, preferably a methyl group, n is an integer between about 200 and about 1200, and preferably between about 300 and about 1000, and m is zero or an integer between 1 and 5, and is preferably 0, 1 or 2.

The kinematic viscosity (at 20°C) of a polyvinylsiloxane according to the invention, and in particular of a compound of formula (II) where $R_1$, $R_2$, $R_3$, $R_4$, and $R_5$ are methyl, is preferably between about 100 mPas and about 65,000 mPas, and preferably between about 800 and about 12,000 mPas and (ASTM D445). For the purposes of the present invention, it is possible to use either a single compound with predetermined viscosity, for example of about 5000 mPas, or a mixture of two or more compounds with different viscosities to obtain a viscosity intermediate between those of the different compounds (for example the said viscosity of about 5000 mPas can be obtained by mixing, in suitable amounts, a compound with viscosity of about 1000 mPas and a compound with viscosity of about 10,000

mPas).

Examples of polymethylsiloxane compounds containing vinyl-siloxane groups that can be used in the present composition are sold under the trademarks Silopren U1, Silopren U5, Silopren U10, Silopren U65 (Bayer AG), PS441, PS441.2, PS442, PS443, PS444, PS445, PS447.6, PS463, PS491, PS493, PS735 (United Chemical Technologies).

The aforementioned addition-curing reaction is typically effected in the presence of a metallic catalyst, which is added to the compounds that are to be cured, preferably in the form of a soluble salt or an organometallic complex. The quantities are about 5-10 ppm of metal relative to the total weight of the composition. The metal is preferably chosen from among the transition medals, for example rhodium or, more preferably, platinum, preferably as a soluble salt. Examples of catalysts that can be used for the aforementioned reaction are sold by the company United Chemical Technologies with the names PC072, PC073, PC074, PC075, PC075.5 and PC076.

The silicone composition according to the present invention can in addition advantageously contain silicone oils, with the aim of modifying either the viscosity of the mixture that is to be cured or the mechanical properties of the final elastomer. In particular, whereas on the one hand addition of the said oils can alter the viscosity of the mixture to be cured, making its application easier, on the other hand the presence of these oils (which do not take part in the crosslinking reaction) in the final rubber contributes to control of the final softness of the material, which is to be such as not to transmit (or transmit to a negligible extent) undesirable mechanical stresses on optical components embedded in the said material. The kinematic viscosity of these oils is preferably between about 20 mPas and about 2000 mPas at 25°C (ASTM D445), with a viscosity between about 100 mPas and about 1000 mPas being mostly preferred. To obtain the desired viscosity of the mixture to be cured and the desired characteristics of softness of the final elastomer, the aforementioned oils can be used either individually or as a mixture of several oils with different viscosities. Typically, the amount of silicone oil in the final composition can vary from about 30% to about 60% by weight, depending on the required viscosity for the mixture to be cured and on the desired softness characteristics of the final resin.

Silicone oils that can be used advantageously for the purposes of the present invention are α-ω-trimethylsiloxy-polydimethylsiloxanes of general formula:

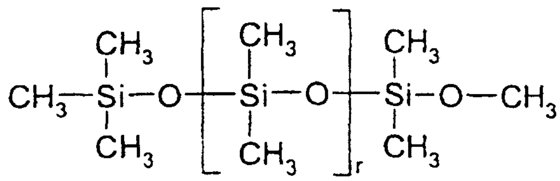

where r is an integer between about 30 and about 500, preferably between about 100 and about 400.

Examples of silicone oils that can be used for the present composition are sold under the trademarks Baysilone M100, Baysilone M500, Baysilone M1000 (Bayer AG), DC 200/20, DC 200/500, DC 200/1000 (Dow Corning), AK100, AK500, AK1000 (Wacker).

A composition according to the present invention can in addition contain silica, typically in quantities between about 5% and about 20% by weight. Pyrogenic silica partially silanized in the form of submicroscopic particles (submicroscopic fire-dry fumed silica) with particle size of about 0.007-0.01 μm can be used advantageously. Examples of commercially available silica include silica Cab-O-Sil TS610 (Cabot), silica HDK H15, HDK H20, HDK H30 (Wacker). The presence of silica in the composition has the dual purpose of imparting thickening of the thixotropic type to the liquid mixture during the application stage (decrease in viscosity when the mixture is subjected to shearing stresses, increase in viscosity when the mixture is at rest) and of endowing the final material with improved mechanical properties.

For practical application, the vinylic component of the mixture to be cured is generally kept separate from the hydrogen-siloxane component up to the moment of application.

For this purpose it can be advantageous to prepare two separate mixtures, each containing the aforementioned components, mixed with other suitable additives. The two-component silicone rubber can then be obtained by mixing, in suitable proportions, a part A and a part B. A typical example of a composition of parts (or components) A and B is as follows:

- Part A: containing one or more vinyl-siloxane compounds, a catalyst, optionally a silicone oil (or mixture of several silicone oils) to achieve the desired viscosity for application and, optionally, a suitable amount of silica; and
- Part B: containing one or more hydrogen-siloxane curing agents, optionally a silicone oil (or mixture of oils) and optionally, a suitable amount of silica.

According to an alternative embodiment, part B can additionally contain a certain amount of vinyl-silicone compound.

Part A and part B are then mixed together in suitable proportions at the moment of application of the material.

Since it is necessary, for the specific application in optical device 100, that the elastomeric composition should be able to be inserted in housings with relatively small dimensions, such as the space between the fins 109, it is preferable that the mixture for application (Part A + Part B) should have a fairly low kinematic viscosity, preferably less than about 2000 mPas at 20°C, and yet sufficiently high, for example greater than about 500 mPas, so as to avoid excessive flow of the said mixture.

A viscosity between about 800 mPas and about 1500 mPas is particularly preferred. The two parts of which the silicone rubber according to the invention is composed can preferably each have roughly the desired viscosity for the specific application, or that viscosity can be obtained on mixing the two parts, which will have respectively a higher viscosity and a lower viscosity than that desired, the final application viscosity being achieved when the two parts are mixed according to the predetermined stoichiometric proportions. As stated previously, the desired viscosity of the mixture can be obtained advantageously by adding a sufficient amount of silicone oil of a suitable viscosity to the two parts of the mixture.

Once the two components of the silicone rubber have been mixed, the resulting mixture is poured into the appropriate housings, as described below. The working time of the mixture, or the useful period during which the mixture can be manipulated without appreciable increase in viscosity, varies from about 10 minutes to about 30, and is preferably about 15-20 minutes. This period of time is generally considered sufficient to allow the operative to place the mixture easily into the housings. After that period of time, the viscosity of the mixture, as a result of progress of the curing reaction between the components, gradually increases, and placing of the material in the respective housings can become difficult.

From the moment of mixing of the two components, the material takes about 30 minutes to about 2 hours, preferably 1-1.5 hours to reach a hardness similar to the final hardness, for which the curing reaction can be regarded as substantially completed. As stated previously, the rubber will however need to have a somewhat lower hardness so as not to cause excessive mechanical stresses on the fibre-optic component 200 embedded in it. The desired softness of a silicone rubber according to the invention can be obtained either by suitable adjustment of the stoichiometric ratio of the reactants (on reducing the amount of hydrogen-siloxane compound there is a decrease in the degree of crosslinking of the elastomer and hence its hardness), or by adding a suitable amount of silicone oils of suitable viscosity to the mixture. Preferably, a silicone rubber according to the invention has a needle penetration value, measured according to standard ASTM D1321, between about 300 1/10 mm and about 600 1/10 mm, preferably between about 400 1/10 mm and about 500 1/10 mm.

Application of the liquid mixture and of the fibre-optic component 200 inside optical device 100 for the purpose of embedding the said component in the silicone material can take place according to various methods of assembly. In all the cases described in the following, the liquid silicone mixture referred to is to be understood as the mixture of the two vinyl-siloxane and hydrogen-siloxane components, including catalysts and other any additives such as silicone oils or silica. As mentioned previously, the said mixture has a sufficiently reduced viscosity, i.e. to permit its easy application in the spaces with reduced dimensions of the optical device 100, though without being excessively fluid, to avoid excessive flow of the said mixture inside the housings. Typically, the viscosity of the mixture applied is between about 500 mPas and about 2000 mPas, and is preferably between about 800 and 1200 mPas.

A first method of assembly of the optical device according to the invention comprises a first step of placement of the fibre-optic component 200 in the housing circuit 108 of base 101, and a next step that comprises pouring of the liquid silicone mixture on the said component, in a quantity such as to cover the said component with a layer about 1-2 mm thick. Placement of the fibre-optic component 200 is done with particular care so as not to induce stresses in the said component. A spiral profile of placement of the optical component, as shown in Fig. 1, may prove advantageous in that it ensures minimum stress for the fibre-optic component 200. Once the silicone mixture has been placed inside housing 108 made in base 101, the optical device 100 is left open at room temperature for about 2 hours so as to reach the desired degree of cure of the rubber, after which it is closed. This method offers the advantage of permitting easy recovery of the optical component before applying the silicone mixture, if the component should exhibit problems, for example as a result of incorrect handling of it in the placement stage.

A second method of assembly of the optical device according to the invention comprises, as the first step, a first pouring of a minimum amount of silicone composition (for example a thickness of about 0.8 mm) on the bottom of housing 108 of the optical device 100. Next, once this first layer of silicone rubber has hardened, the fibre-optic component 200 is placed in the said housing. Then a second pouring of the liquid silicone mixture is carried out so that the fibre-optic component 200 is embedded completely. This second layer is then left to cure as described previously for the first method. The presence of the first layer of silicone rubber on the bottom of housing 108 provides slight adhesion of optical component 200 placed in the said housing, thus reducing the risk of possible slipping of the said component out of the said housings, as could occur in the first method.

A third method comprises a first stage in which the silicone mixture is poured into housing 108 of optical device 100. Immediately thereafter, the fibre-optic component is placed in the said housing, taking care to embed it completely in the mixture that is still in the liquid state. Also in this third instance, it is possible to exert better control during the stage of placement of the optical component, preventing the possibility of accidental slippage out of the housing.

Adopting one of the methods described above, the fibre-optic component is placed in the relevant housing with minimum stress, so as not to induce substantial changes of the transfer function of the said component. In any event, possible minimal changes of this transfer function are kept constant over time on account of the locking action of the silicone material on the optical component, thus ensuring constancy of the optical behaviour of the component.

A person skilled in the art can easily find, on the basis of the above description, suitable methods of placement of the fibre-optic component inside the housing circuit, including the use of protective compounds that are different from those explicitly referred to.

The protective compound thus introduced into the housing circuit provides a permanently soft contact surface, which is thus able to absorb the stresses to which the fibre-optic component is subjected during the placement stage. This compound prevents the fibre-optic component 200 coming into contact with the walls of the housing circuit 108 and in addition is able to hold the fibre-optic component 200 in a position that does not vary significantly during the life of the device, yet without transmitting any harmful mechanical stresses to the said component.

Referring to the particular solution in Fig. 2, corresponding to the outlet openings 104 the cover adheres to the raised parts 112 and so does not exert pressure on the underlying final section 203 of the fibre-optic component 200.

It is also possible to use other planar profiles for which the fibre-optic component 200 lies above a plane so that no contact occurs only between specified sections of the component, for example those sections that are more susceptible to changes of the transfer characteristic.

Planar profiles with forms different from that shown in Fig. 1 can be, for example, curves of the spiral type with coils that are not circular and/or are not equispaced.

Furthermore, the fibre-optic component 200 can be arranged so as to prevent contact through direct superposition between portions of the fibre-optic component 200 but permit some of its parts to be tangents.

According to a particular alternative embodiment of the invention, the fibre-optic component 200 may not be arranged in planar fashion, but can be wound on a mandrel made on base 101 in such a way that superpositions do not occur. Preferably, fibre-optic component 200 is wound helically. More preferably, it is wound in such a way that there is no contact of any type between different portions of the component.

The elements delineating the housing circuit 108 are such as not to create changes in the behaviour of fibre-optic component 200, for example they do not contain sharp corners and do not impose excessive curvature on the said component.

The optical device 100 described is suitable for housing, in addition to the aforementioned chirped grating 202, any other fibre-optic component.

Examples of known fibre-optic components are: fibre gratings, active fibres used for amplification of optical signals, fibre couplers, optical fibres in general (such as monomode fibres, polarization-maintaining fibres, dispersion-shifted fibres, fibres used in optical sensors etc.) as well as components obtained by optical connection of these.

It is further pointed out that the listed fibre-optic components can also include sections of purely transmissive optical fibre (such as a monomode fibre) arranged at the input and/or output or in intermediate portions of the said component.

As already stated, the technical solution is suitable for all fibre-optic components that have a portion of fibre with a corresponding transfer function that is susceptible to changes as a result of mechanical stresses and in which this portion is of a length such as to require that it be arranged in a wound configuration.

Device 100 ensures that fibre-optic component 200 maintains, during the life of the said device, a stable position, i.e. it ensures that the fibre-optic component, over its entire length or for predetermined sections, does not move significantly from the initial position inside base 101.

In the particular case of device 100 described previously, the position of fibre-optic component 200 is kept stable owing to the fact that the housing circuit 108 has dimensions that do not permit significant mobility of the said component, or because of the action of the protective compound.

The protective compound and the housing circuit 108 represent particular fixing elements but other fixing elements are also suitable, such as other types of adhesives, grooves, containment fins, tubular paths for the fibre, the cover itself, crosslinkable resins used separately or combined, or any other element suitable for the purpose.

A particular chromatic dispersion compensator (CDC), which uses the optical device 100 illustrated above, will now be described.

Fig. 3a shows a schematic representation of a chromatic dispersion compensator 300, comprising a three-port optical circulator 301 that has a first port connected to a fibre 302, a second port connected to a fibre-optic component 200, of the type described with reference to Fig. 1, and a third port connected to another fibre 303.

The fibre-optic component 200 comprises, for example, two chirped gratings 202' and 202" of DCG type in cascade.

Fig. 3b is a schematic representation of another type of chromatic dispersion compensator 300', comprising a four-port circulator 305 connected to fibres 302 and 303 and to a first fibre-optic component 200, and to a second fibre-optic component 200' similar to the first. Each of the fibre-optic components 200 and 200' includes two chirped gratings 202' and 202" in cascade.

The fibre-optic components 200 and 200' have reflected bands that are partially or completely superposed. The dispersion of compensator 300' is the resultant of the dispersion of components 200 and 200' in the superposition band.

As is well known, along a fibre, such as a single-mode fibre, the components of an optical pulse are propagated at different speeds. In a step-index fibre of the type according to standard ITU-T G652, for example, the components with larger wavelength are propagated faster than the components with smaller wavelength. This causes a broadening and hence distortion of the data pulse.

The chromatic dispersion compensators described are positioned at the end of a section of fibre to compensate the chromatic dispersion suffered by the pulses, corresponding to various optical signals, that were propagated along the said section of fibre.

A pulse corresponding to a signal that has a defined optical wavelength, present at fibre 302, is transmitted from the optical circulator 301 to the fibre-optic component 200. Each component of the optical pulse is reflected by the chirped gratings 202' or 202" at a point for which the known Bragg condition is satisfied. The components with greater wavelength satisfy the said condition after being propagated over a larger section of the chirped grating relative to the components with smaller wavelength. The components with greater wavelength, travelling a longer path, suffer a greater delay whereas those with smaller wavelength travel a shorter path and suffer a smaller delay. The delays introduced by the chirped gratings are of opposite sign to those introduced by the optical fibre because of chromatic dispersion and are such as to compensate them.

The pulses corresponding to signals that have different optical wavelengths after compensation of dispersion are thus sent, via circulator 301, to fibre 303. The fibre-optic component 200 is suitable for compensation of chromatic dispersion of pulses corresponding to a predetermined number of optical signals with respective wavelengths, such as the optical signals of a wavelength division multiplexing (WDM) system.

Compensator 300' in Fig. 3b operates similarly to compensator 300 in Fig. 3a but ensures that compensation of the chromatic dispersion accumulated by signals with different wavelengths occurs partly in the first fibre-optic component 200 and, after a further passage in the optical circulator 305, is completed in the second fibre-optic component 200'.

Fig. 4 shows an exploded perspective view of a particular container 400 able to contain two chromatic dispersion compensators of type 300' described in Fig. 3b. The connecting optical fibres 302 and 303 are not shown in Fig. 4.

Container 400 has a lower rack 404 containing a four-port circulator 305 and two superposed optical devices 100. The optical device 100 that rests directly on the lower rack 404 is of the type shown in Fig. 2, i.e. it has two output fibres and is connected in series to optical device 100 above it.

Circulator 305 is laid gently on lower rack 404 in the central part of the ring delimited by the two optical devices 100.

Positioned above the lower rack there is an intermediate rack 405 which in its turn contains a four port circulator 305', similar to circulator 305, and two optical devices 100 superposed and connected in series as indicated previously.

Fig. 4 shows optical device 100 in the upper position, and is fitted to intermediate rack 405 by means of suitable cylindrical elements 408.

An organizer rack 406 is superposed on intermediate rack 405 and is closed with a cover 407.

The circulators 305 and 305' are for example manufactured by JDS (USA), E-TEK CA (USA) and are of parallelepiped shape.

The racks and the cover are, for example, made of plastics material of the same type as used for making the base 101 of optical device 100.

Fig. 5a shows a perspective view of the lower rack 404 that is of rectangular shape and has edges 411, cylindrical or semicylindrical elements 408 for fitting the two optical devices 100, two posts 409 for fitting the circulator 305 and small pillars 410 for the passage of screws or other fastening elements.

Fig. 5b shows the intermediate rack 405 comprising, in addition to the components already described with reference to the bottom rack 404, two posts 409 for securing the circulator 305' and two slits 412 for passage of the optical fibres that come from the two optical devices 100 housed in the bottom rack 404. The intermediate rack is provided with an opening 413 that permits passage of the optical fibres for connection to the circulator 305 housed in the bottom rack 404.

Fig. 5c shows the organizer rack 406 comprising openings 412 arranged on four sides of the rack for passage

of the optical fibres from all four optical devices 100 present in the lower 404 and intermediate 405 racks, and openings 418 for passage of the fibres connected to the ports of circulators 305 and 305'.

On edges 411 of the organizer rack, there are holes 420 of various sizes for passage of elements for locking the cover 407.

The organizer rack 406 also has fins 415 which delimit guides for the optical fibres and suitable housings 414 that are able to contain the welded fibre sections. Advantageously, organizer rack 406 is provided with two sets of housings 416 for circulators of cylindrical type of different sizes.

Container 400 for a CDC, described, is especially versatile, in that it permits the use of circulators of parallelepiped shape 305 and 305' but they can also be replaced with circulators of cylindrical shape.

In particular, a pit 417 is made in housings 416, so that circulators of cylindrical shape and having certain dimensions cannot project above the edges 411 of the organizer rack 406.

Circulators of cylindrical shape are manufactured, for example, by the aforementioned JDS and E-TEK.

The organizer rack 406 has openings 419 for the passage of optical fibres to the outside and pillars 410' which, aligned with pillars 410 of the bottom rack 40 and intermediate rack 405, permit, for example, the passage of screws for joining the three racks and the cover 407.

In the two chromatic dispersion compensators, each made according to the scheme shown in Fig. 3b, and containing in the said container 400, the optical fibres (not shown in Fig. 4) that come from the circulators 305, 305' and from the four optical devices 100, pass respectively through the appropriate openings 413 and 412 to reach the organizer rack 406.

The optical fibres are wound round the fins 415 and are connected together in ways that are obvious to a person skilled in the art from the above description and from the relevant diagrams.

It can be seen that the fibre-optic components 200 and 200' are each arranged in their own casing, comprising the base 101 and the corresponding cover, and are separated structurally by the optical circulators 305 and 305' arranged externally to the said casings.

The applicant has noted that the optical device 100 makes it possible to use the fibre-optic component housed within it as a discrete component. For example, the optical device 100 can easily be transferred from one container to another without approaching the fibre-optic component housed therein and so avoiding repetition of the placement operation, which is particularly delicate and requires subsequent characterization, by measuring its transfer function.

Containers similar to container 400, able to house optical equipment of a type that is different from the chromatic dispersion compensator illustrated and comprising a fibre-optic component suitably connected to an optical device, for example an optical isolator, or an optical coupler in planar optics or of the fused-fibre type, can easily be made by a person skilled in the art on the basis of the above description.

An example of optical equipment, suitable for housing in a container of the type as described with reference to Fig. 4, is a fibre-optic amplifier of a known type.

An optical amplifier of this kind comprises, for example, an erbium-doped optical fibre arranged between two optical isolators and connected to an optical coupler capable of transferring, to the doped optical fibre, the optical power emitted from a suitable pump source.

The erbium-doped optical fibre is advantageously arranged, as described previously, in base 101 and the optical isolators and the optical coupler are arranged inside container 400 in a similar manner to that described with reference to the optical circulators 305 and 305' in Fig. 4.

The optical connections between the erbium-doped fibre, the optical coupler and the two optical isolators are effected inside an organizer rack similar to rack 406 described earlier.

**EXAMPLE 1**

Measurements of reflectivity of chirped gratings

The Applicant has conducted experiments measuring the reflection spectrum of a fibre chirped grating, before and after placement, both in a module according to the known technology and in a casing such as that described with reference to the optical device 100.

As already stated, devices for compensating chromatic dispersion are housed, in accordance with the known technology, in suitable modules such as those manufactured by the Applicant and designated with the symbol CDCM (Chromatic Dispersion Compensation Module), for example models CDC 0480, and CDC 016160.

Such a module is for example suitable for containing two devices for the compensation of chromatic dispersion, used in a bidirectional optical transmission system.

Referring to Fig. 6, the module 600 comprises a metallic base 601 provided with channels 602 for passage of the optical fibres to the outside, a central area 603 capable of containing one or two circulators, arc-shaped fins 604 and housings 605 suitable for accommodating the cylindrical casings for protecting the welds.

The module used in the experiment was about 21 cm long and 14 cm wide.

**EXAMPLE 1a**

Measurement of reflectivity of a chirped grating arranged in a rectilinear position

The fibre chirped grating in question, manufactured by the applicant, had a total length of about 2 metres, with the grating occupying about 160 cm of that.

A preliminary evaluation of the reflectivity of the fibre chirped grating was effected by carefully placing the chirped grating on a bench in an almost rectilinear position.

One end of the fibre chirped grating was connected to a first port of a conventional coupler. A second port of this coupler was suitably connected to a wide-spectrum optical source while a third port was connected to a spectrum analyser suitable for measuring the spectrum of the signal reflected from the chirped grating.

The other end of the optical fibre, in which the chirped grating was inscribed, was cut in such a way that the final surface was suitably inclined relative to the optical axis of the said fibre, typically with an inclination of 7-8°, to prevent reflections. To reduce any residual reflections, the said end was immersed in an optical oil possessing a refractive index n equal to that of the fibre's core ($n \cong 1.46$).

Fig. 7a shows the spectrum of reflectivity of the chirped grating measured prior to placement in base 601, i. e. it shows the absolute value of the ratio, expressed in decibels, between the reflected power and the transmitted power in relation to the wavelength.

The applicant points out that in the graph of reflectivity shown in Fig. 7a and in the graphs in the following figures, the value shown on the ordinate also takes account of the losses introduced by the measurement set-up. These graphs are significant not for the absolute value of reflectivity, but for evaluating its variation with the wavelength.

**EXAMPLE 1b**

Measurements of reflectivity of a chirped grating housed in a device according to the state of the art

Next, the applicant placed the fibre chirped grating in base 601. The fibre chirped grating was then arranged as several windings along paths of the circular type delimited by fins 604 and housings 605.

Some housings 605 were occupied by welds in the fibre whereas other housings constituted guides for sections of the fibre component.

In one such path, between two contiguous fins 604, several portions of different windings were necessarily housed with contact between them and there were also superpositions between various points of the portion of fibre containing the chirped grating.

Next, in the manner described above, measurement of reflectivity was repeated. The measured spectrum is shown in Fig. 7b. The applicant observed the presence of a sharp drop in reflectivity corresponding to a wavelength of about 1544.5 nm.

The applicant assumed that this drop in reflectivity was due to mechanical stresses exerted on the fibre component during placement.

The applicant believes that the contacts present between some sections of the fibre component can constitute mechanical stresses such as to alter the reflectivity spectrum, as found by measurement. In particular, the applicant considers that contacts through superposition can induce mechanical stresses of greater magnitude than those induced by contacts between tangent portions.

Then the applicant extracted the test fibre and inserted it again in base 601. The reflectivity spectrum was then measured, with the result shown in Fig. 7c. It can be seen in Fig. 7c that there is a drop in reflectivity corresponding to wavelength of about 1540 nm.

The drop in reflectivity corresponding to another wavelength value may be due to stresses occurring in a zone of the fibre different from that corresponding to Fig. 7b.

A second fibre chirped grating was then considered; this had a length of about 1.5 m and a diameter, including the recoating region, of about 0.4 mm.

Fig. 8 shows, with a thin continuous line, the reflectivity spectrum of this second chirped grating, extended, i. e. carefully laid on a bench in an almost rectilinear position and not subjected to forces. The spectrum occupies a wavelength range between 1538.5 nm and 1545 nm.

This second chirped grating was inserted in base 601 made according to the state of the art and its reflectivity spectrum was measured as described above.

The measured reflectivity spectrum of this second chirped grating housed in base 601 is shown in Fig. 8 with a dashed line. For some wavelength values, this spectrum diverges from that relating to the extended component by

an amount less than 0.5 dB. For other wavelength values, for example corresponding to a wavelength of 1539.5 nm, there is a deviation of about 0.5 dB. For wavelength of 1544.5 nm there is a deviation of about 1 dB.

**EXAMPLE 1c**

Measurement of reflectivity of a chirped grating arranged in a housing according to the invention

The applicant made a base 101 as described with reference to Fig. 1.

Base 101 was made of reinforced polycarbonate with dimensions of 12 cm x 12 cm x 3 mm.

The housing circuit 108, with a spiral profile, was obtained by milling inside the base 101. The cover used had a thickness of 0.7 mm.

The arc-shaped fins 109 had a thickness of about 0.5 mm and a height of about 2.5 mm.

The distance between two adjacent arc-shaped fins 109 was about 1 mm.

Next, the fibre chirped grating was placed, in base 101, according to the method described previously with reference to optical device 100, which additionally envisages pouring of the protective compound and its curing.

The protective compound used was a mixture made according to the next Example 2. This mixture was cured for about 2 hours.

The measured reflectivity spectrum of the second chirped grating, of Example 1b, placed in base 101, is shown by the thick continuous line in Fig. 8.

All the deviations between the points of the spectrum of the chirped grating placed in base 101 and those of the extended chirped grating are less than 0.5 dB, and in particular are less than 0.2 dB.

These experiments have shown that optical device 100 makes it possible to protect the fibre-optic component 200, greatly reducing the changes in transfer function that occur in the placement stage relative to the changes that occur in placement in a conventional type of module.

**EXAMPLE 2**

Preparation of the silicone rubber

The Applicant prepared a first silicone rubber by mixing the following parts A and B, with the following compositions:

| **Part A** | | | |
|---|---|---|---|
| **Compound** | **Parts by weight** | **vinyl groups, mmol/g** | **Total vinyl groups (mmol)** |
| Silopren U1 | 16 | 0.13 | 2.08 |
| Silopren U10 | 16 | 0.05 | 0.8 |
| Silicone oil M100 | 11 | - | - |
| Catalyst | 0.2 | - | - |
| Silica Cab-O-Sil TS610 | 6.8 | - | - |

| **Part B** | | | |
|---|---|---|---|
| **Compound** | **Parts by weight** | **-Si-H groups, mmol/g** | **Total -Si-H groups (mmol)** |
| Silopren U230 | 1.0 | 2.3 | 2.3 |
| Silicone oil M100 | 15 | - | - |
| Silicone oil M500 | 26 | - | - |
| Silica Cab-O-Sil TS610 | 8.0 | - | - |

The vinyl-siloxane compounds Silopren U1 and Silopren U10, the hydrogen-siloxane curing agent Silopren U230 and the silicone oils M100 and M500 are marketed by the company Bayer AG. Silica Cab-O-Sil TS610 is marketed by the Cabot company.

The kinematic viscosity of the two parts A and B (and hence of the mixture of the two) is about 1000 mPas

at 25°C (ASTM D445).

Parts A and B are mixed in 1:1 ratio, so the molar ratio between vinyl groups and hydrogen-siloxane groups is about 1:0.8, hence with a slight stoichiometric deficit of the last-mentioned reactive groups. The working times of the fluid mixture are about 15-20 minutes. Approximately one hour after mixing the two components, the composition has the consistency of a rubbery solid, reaching its final hardness in two-three hours. In the needle penetration test according to standard ASTM D1321, the rubber gives a value of about 470 tenths of mm.

**EXAMPLE 3**

Preparation of the silicone rubber

The applicant prepared a second silicone rubber following the procedure described in Example 2, with the only difference that the parts by weight of compound Silopren U230 in part B of the mixture were 1.25 instead of 1.0. In this way, on mixing part A with part B in 1:1 proportions, the stoichiometric ratio between vinyl groups and hydrogen-siloxane groups becomes about 1:1. The rubber so obtained displays characteristics similar to those of Example 2, with a penetration value of about 400 tenths of mm.

**EXAMPLE 4**

Evolution of hydrogen through ageing of the rubber

The applicant prepared 10 g specimens of silicone rubber according to Examples 2 and 3, by distributing a thin layer (about 200 µm thick) of liquid mixture on the inside surface of a series of test-tubes (internal volume 150 $cm^3$). 0.1 ml of water (5.5 mmol) was also present in the test-tubes.

A first group (G1) of specimens of 1:0.8 mixture (vinyl groups : hydrogen-siloxane groups) according to Example 2 and a second group (G2) of specimens of 1:1 mixture according to Example 3 were prepared in this way.

Each of the two groups G1 and G2 was divided into two subgroups, respectively G1a and G1b, and G2a and G2b. The test-tubes of both subgroups G1a and G2a were sealed immediately after distribution of the liquid mixture on the surface of the test-tubes and the mixture was cured with the test-tube sealed. On the other hand, the mixtures in subgroups G1b and G2b were cured with the test-tube open, sealing the test-tubes once curing had ended.

On completion of curing, approximately three hours after deposition of the liquid mixture, the test-tubes containing the silicone rubber were submitted to an ageing test at 100°C for 15 days in a stove (roughly corresponding to ageing of more than 20 years at a temperature of about 10°C).

At the end of ageing, the test-tubes were recovered and the composition of the gases evolved inside the said test-tubes was analysed by means of a Hewlett-Packard Mod. 5480 gas chromatograph to detect any traces of hydrogen.

The results of the ageing test are presented in Table 1.

Table 1:

| Ageing test | | | |
|---|---|---|---|
| **Group** | **Molar ratio vinyl groups/ H-siloxane groups** | **Type of sealing** | **Amount of $H_2$ evolved (average of the group) $cm^3$/kg rubber** |
| G1a | 1:0.8 | Immediate | < 0.03 |
| G1b | 1:0.8 | After curing | < 0.03 |
| G2a | 1:1 | Immediate | < 0.05 |
| G2b | 1:1 | After curing | < 0.03 |

As can be seen from the data in Table 1, even in the more severe conditions of group G2a, hydrogen evolution remained well below the limits indicated as acceptable of 1 $cm^3$/kg and preferably of 0.5 $cm^3$/kg.

In a similar ageing test on a comparative composition prepared according to Example 3 but with a ratio 1.5: 1 of ≡ SiH groups relative to vinyl groups (i.e. 4.32 parts by weight of compound Silopren U230 in the total composition), the amount of hydrogen evolved (measured in the test-tube sealed after curing) was greater than 100 $cm^3$/kg of material.

## Claims

1. An optical device (100) comprising:

   - a fibre-optic component (200) associated with a predetermined transfer function and capable of being arranged in a plurality of adjacent windings; and
   - a rigid housing (101) capable of containing said fibre-optic component;

   **characterized in that** said housing (101) comprises:

   - at least one separating element (109) capable of physically separating the windings of said plurality of adjacent windings so as to avoid contacts through superposition therebetween; and
   - an element for fixing said fibre-optic component (200), said fixing element being capable of holding said fibre-optic component (200) in a stable position.

2. The optical device (100) according to claim 1, wherein said separating element is capable of separating the windings of said plurality of adjacent windings so as to avoid contacts therebetween.

3. The optical device (100) according to claim 1, wherein said fibre-optic component (200) comprises, in one portion thereof, a component selected from the group comprising: a fibre grating (202), a fibre chirped grating (202).

4. The optical device (100) according to claim 1, wherein said fibre-optic component (200) comprises a component selected from the group comprising: a chromatic dispersion compensator, an active fibre.

5. The optical device (100) according to claim 1, wherein said fibre-optic component (200) has a length of between 10 cm and 20 m.

6. The optical device (100) according to claim 1, wherein said fibre-optic component (200) has a length of between 20 cm and 20 m.

7. The optical device (100) according to claim 1, wherein said rigid housing (101) is made of a material selected from the group comprising: polycarbonate, a material comprising an aluminium alloy.

8. The optical device (100) according to claim 1, wherein said rigid housing (101) comprises fins (109) capable of delineating a housing circuit (108) for said fibre-optic component (200).

9. The optical device (100) according to claim 1, wherein said housing (101) comprises grooves.

10. The optical device (100) according to claim 1, wherein said separating element comprises at least one fin (109) interposed between two windings of said plurality of adjacent windings.

11. The optical device (100) according to claim 1, wherein said separating element comprises crosslinkable resins.

12. The optical device (100) according to claim 1, wherein said fixing element is selected from the group comprising: a sealing grease, a silicone compound, a polyurethane resin.

13. The optical device (100) according to claim 1, wherein said fixing element is a cover structurally linked to said housing (101).

14. An optical apparatus comprising a container (400), inside which are arranged:

    - an optical device (100) according to any of the preceding claims; and
    - an optical component (305) capable of being connected to said fibre-optic component (200).

15. The optical apparatus according to claim 14, wherein said optical component (305) comprises at least one optical fibre for connection.

16. The optical apparatus according to claim 15, wherein said container (400) comprises a unit (406) for connection

of said fibre-optic component (200) to said at least one optical fibre for connection of the optical component (305).

**17.** The optical apparatus according to claim 14, wherein said fibre-optic component (200) is selected from the group comprising: a fibre-optic grating, an active optical fibre.

**18.** The optical apparatus according to claim 14, wherein said optical component (305) is selected from the group comprising: an optical circulator, an optical isolator, an optical coupler.

**19.** A method of assembling an optical device comprising a fibre-optic component (200) associated with a predetermined transfer function,
said method comprising the steps of:

- placing said fibre-optic component (200) inside a rigid housing (101) in a wound configuration such as to avoid superpositions between the various parts of the fibre-optic component (200); and
- locking by means of a fixing element said fibre-optic component (200) in said configuration so as to prevent movements inside the housing (101).

**20.** The method according to claim 19, wherein said step of placing the fibre-optic component (200) inside the housing (101) comprises placing said fibre-optic component (200) in a configuration which avoids contacts between the various parts of the fibre-optic component (200).

**21.** The method according to claim 19, wherein said step of placing the fibre-optic component (200) inside the housing (101) comprises placing said fibre-optic component (200) in a spiral configuration.

**22.** The method according to claim 21, wherein said spiral configuration has a pitch greater than or equal to the maximum diameter of the fibre-optic component (200).

**23.** The method according to claim 21, wherein said spiral configuration has a pitch approximately equal to 1.5 times the maximum diameter of said fibre-optic component (200).

**24.** The method according to claim 19, wherein said locking step comprises a step of inserting a quantity of a protective compound in said housing (101).

**25.** The method according to claim 19, wherein said transfer function is associated with a predetermined reflectivity spectrum.

**26.** The method according to claim 25, wherein, in said step of placing the fibre-optic component (200) inside the housing (101), said reflectivity spectrum undergoes a change of less than 0.5 dB.

**27.** The method according to claim 26, wherein, in said step of placing the fibre-optic component (200) inside the housing (101), said reflectivity spectrum undergoes a change of less than 0.2 dB.

**Patentansprüche**

**1.** Optische Vorrichtung (100) umfassend:

- eine faseroptische Komponente (200), die einer vorgegebenen Übertragungsfunktion zugeordnet und dafür ausgelegt ist, in mehreren aneinander angrenzenden Windungen angeordnet zu werden, und

- ein starres Gehäuse (101), das dafür ausgelegt ist, die faseroptische Komponente aufzunehmen,

**dadurch gekennzeichnet, daß** das Gehäuse (101) umfaßt:

- mindestens ein Trennelement (109), das dafür ausgelegt ist, die Windungen der Mehrzahl der Windungen voneinander zu trennen, so daß überlagerungsbedingte Kontakte derselben vermieden werden, und

- ein Element zum Fixieren der faseroptischen Komponente (200), wobei das Fixierelement dafür ausgelegt ist,

die faseroptische Komponente (200) in einer stabilen Position zu halten.

**2.** Optische Vorrichtung (100) nach Anspruch 1, bei welcher das Trennelement dafür ausgelegt ist, die Windungen der Mehrzahl aneinander angrenzender Windungen so voneinander zu trennen, daß Kontakte zwischen ihnen vermieden werden.

**3.** Optische Vorrichtung (100) nach Anspruch 1, bei welcher die faseroptische Komponente (200) in einem Abschnitt eine Komponente umfaßt, die ein Fasergitter (202)oder ein gechirptes Fasergitter (202) ist.

**4.** Optische Vorrichtung (100) nach Anspruch 1, bei welcher die faseroptische Komponente (200) eine Komponente umfaßt, die ein chromatischer Dispersionskompensator oder eine aktive Faser ist.

**5.** Optische Vorrichtung (100) nach Anspruch 1, bei welcher die faseroptische Komponente (200) eine Länge zwischen 10 cm und 20 m hat.

**6.** Optische Vorrichtung (100) nach Anspruch 1, bei welcher die faseroptische Komponente (200) eine Länge zwischen 20 cm und 20 m hat.

**7.** Optische Vorrichtung (100) nach Anspruch 1, bei welcher das starre Gehäuse (101) aus einem Material besteht, das Polycarbonat oder eine Aluminiumlegierung enthält.

**8.** Optische Vorrichtung (100) nach Anspruch 1, bei welcher das starre Gehäuse (101) Rippen (109) aufweist, die dafür ausgelegt sind, einen Gehäusekreislauf (108) für die faseroptische Komponente (200) vorzugeben.

**9.** Optische Vorrichtung (100) nach Anspruch 1, bei welcher das Gehäuse (101) Nuten aufweist.

**10.** Optische Vorrichtung (100) nach Anspruch 1, bei welcher das Trennelement mindestens eine Rippe (109) aufweist, die zwischen zwei Windungen der mehreren aneinander angrenzenden Windungen angeordnet ist.

**11.** Optische Vorrichtung (100) nach Anspruch 1, bei welcher das Trennelement ein vernetzbares Kunstharz enthält.

**12.** Optische Vorrichtung (100) nach Anspruch 1, bei welcher das Fixierelement ein Abdichtschmiermittel, eine Silikonverbindung oder ein Polyurethanharz ist.

**13.** Optische Vorrichtung (100) nach Anspruch 1, bei welcher das Fixierelement eine strukturell mit dem Gehäuse (101) verbundene Abdeckung ist.

**14.** Optisches Gerät umfassend einen Behälter (400), in dem angeordnet sind:

- eine optische Vorrichtung nach einem der vorhergehenden Ansprüche, und
- eine optische Komponente (305), die dafür ausgelegt ist, an die faseroptische Komponente (200) angeschlossen zu werden.

**15.** Optisches Gerät nach Anspruch 14, bei welchem die optische Komponente (305) mindestens eine optische Faser zum Anschließen aufweist.

**16.** Optisches Gerät nach Anspruch 15, bei welchem der Behälter (400) eine Einheit (406) zum Anschließen der faseroptischen Komponente (200) an die mindestens eine optische Faser der optischen Komponente (305) umfaßt, die zum Anschließen dient.

**17.** Optisches Gerät nach Anspruch 14, bei welchem die faseroptische Komponente (200) ein faseroptisches Gitter oder eine optische Faser ist.

**18.** Optisches Gerät nach Anspruch 14, bei welchem die optische Komponente (305) ein optischer Zirkulator, ein optischer Isolator oder ein Optokoppler ist.

**19.** Verfahren zum Herstellen einer optischen Vorrichtung umfassend eine faseroptische Komponente (200), die einer

vorgegebenen Übertragungsfunktion zugeordnet ist, wobei das Verfahren die folgenden Schritte umfaßt:

- Anordnen der faseroptischen Komponente (200) in einer gewundenen Konfiguration in einem starren Gehäuse (101), so daß Überlagerungen zwischen den verschiedenen Teilen der faseroptischen Komponente (200) vermieden werden, und

- Fixieren der faseroptischen Komponente (200) in der Konfiguration mittels eines Fixierelements, so daß Bewegungen innerhalb des Gehäuses (101) verhindert werden.

**20.** Verfahren nach Anspruch 19, bei welchem der Schritt des Anordnens der faseroptischen Komponente (200) in dem Gehäuse (101) das Anordnen der faseroptischen Komponente (200) in einer Konfiguration einschließt, die Kontakte zwischen verschiedenen Abschnitten der faseroptischen Komponente (200) vermeidet.

**21.** Verfahren nach Anspruch 19, bei welchem der Schritt des Anordnens der faseroptischen Komponente (200) in dem Gehäuse (101) das Anordnen der faseroptischen Komponente (200) in einer spiralförmigen Konfiguration umfaßt.

**22.** Verfahren nach Anspruch 21, bei welcher die spiralförmige Konfiguration eine Steigung aufweist, die größer oder gleich dem maximalen Durchmesser der faseroptischen Komponente (200) ist.

**23.** Verfahren nach Anspruch 21, bei welchem die spiralförmige Konfiguration eine Steigung hat, die etwa das 1,5-fache des Maximaldurchmessers der faseroptischen Komponente (200) beträgt.

**24.** Verfahren nach Anspruch 19, bei welchem der Fixierschritt einen Schritt umfaßt, bei dem eine Quantität einer schützenden Substanz in das Gehäuse (101) eingebracht wird.

**25.** Verfahren nach Anspruch 19, bei welchem die Transferfunktion einem vorgegebenen Reflexionsspektrum zugeordnet ist.

**26.** Verfahren nach Anspruch 25, bei welchem sich das Reflexionsspektrum bei dem Schritt des Anordnens der faseroptischen Komponente (200) in dem Gehäuse (101) um weniger als 0,5 dB ändert.

**27.** Verfahren nach Anspruch 26, bei welchem sich das Reflexionsspektrum bei dem Schritt des Anordnens der faseroptischen Komponente (200) in dem Gehäuse (101) um weniger als 0,2 dB ändert.

## Revendications

**1.** Dispositif optique (100) comprenant :

- un composant à base de fibre optique (200) associé à une fonction de transfert et apte à être disposé dans une pluralité d'enroulements adjacents ; et
- un logement rigide (101) apte à contenir ledit composant à base de fibre optique ;

**caractérisé en ce que** ledit logement (101) comprend :

- au moins un élément de séparation (109) apte à physiquement séparer les enroulements de ladite pluralité d'enroulements adjacents de façon à éviter les contacts par superposition entre eux ; et
- un élément pour fixer ledit composant à base de fibre optique (200), cet élément de fixation étant apte à maintenir ledit composant à base de fibre optique (200) dans une position stable.

**2.** Dispositif optique (100) selon la revendication 1 dans lequel ledit élément de séparation est apte à séparer les enroulements de ladite pluralité d'enroulement adjacent de façon à éviter les contacts entre eux.

**3.** Dispositif optique (100) selon la revendication 1, dans lequel ledit composant à base de fibre optique (200) comprend, sur une partie, un composant choisi parmi le groupe comprenant :

- un réseau de diffraction à base de fibre (202), un réseau de diffraction asymétrique à base de fibre (202).

**4.** Dispositif optique (100) selon la revendication 1, dans lequel ledit composant à base de fibre optique (200) comprend un composant choisi dans le groupe comprenant : un compensateur à dispersion chromatique, une fibre active.

**5.** Dispositif optique (100) selon la revendication 1, dans lequel ledit composant à base de fibre optique (200) présente une longueur entre 10 centimètres et 20 mètres.

**6.** Dispositif optique (100) selon la revendication 1, dans lequel ledit composant à base de fibre optique (200) présente une longueur entre 20 centimètres et 20 mètres.

**7.** Dispositif optique (100) selon la revendication 1, dans lequel ledit logement rigide (101) est fait à base de matériaux choisi dans le groupe comprenant : polycarbonate, un matériau comprenant une alliage d'aluminium.

**8.** Dispositif optique (100) selon la revendication 1, dans lequel ledit logement rigide (101) comprend des nervures (109) aptes à délinéer un circuit de logement (108) pour ledit composant à base de fibre optique (200).

**9.** Dispositif optique (100) selon la revendication 1, dans lequel le logement (101) comprend des rainures.

**10.** Dispositif optique (100) selon la revendication 1, dans lequel ledit élément de séparation comprend au moins une nervure (109) interposée entre deux enroulements de ladite pluralité d'enroulements adjacents.

**11.** Dispositif optique (100) selon la revendication 1, dans lequel ledit élément de séparation comprend des résines réticulables.

**12.** Dispositif optique (100) selon la revendication 1, dans lequel ledit élément de fixation est choisi dans le groupe comprenant : une graisse à sceller, un composé silicone, une résine polyuréthane.

**13.** Dispositif optique (100) selon la revendication 1, dans lequel l'élément de fixation est un couvercle structurellement relié au logement (101).

**14.** Appareil optique comprenant un conteneur (400) à l'intérieur duquel sont disposés :

- un dispositif optique (100) selon l'une quelconque des revendications précédentes ; et
- un composant optique (305) apte à être connecté au dit composant à base de fibre optique (200).

**15.** Appareil optique selon la revendication 14, dans lequel ledit composant optique (305) comprend au moins une fibre optique pour la connexion.

**16.** Appareil optique selon la revendication 15, dans lequel le conteneur (400) comprend une unité (406) pour connecter le composant à base de fibre optique (200) à ladite au moins une fibre optique pour la connexion du composant optique (305).

**17.** Appareil optique selon la revendication 14, dans lequel le composant à base de fibre optique (200) est choisi dans le groupe comprenant : un réseau de diffraction à base de fibre optique, une fibre optique active.

**18.** Appareil optique selon la revendication 14, dans lequel le composant optique (305) est choisi dans le groupe comprenant : un circulateur optique, un isolateur optique, un coupleur optique.

**19.** Procédé d'assemblage d'un dispositif optique comprenant un composant à base de fibre optique (200) associé à une fonction de transfert prédéterminée,

ce procédé comprenant les étapes suivantes :

- placer le composant à base de fibre optique (200) à l'intérieur d'un logement rigide (101) dans une configuration enroulée telle que les superpositions entre les différentes parties du composant à base de fibre optique (200) sont évitées ; et
- fermer le composant à base de fibre optique (200) au moyen d'un élément de fixation dans ladite configuration de façon à empêcher des mouvements à l'intérieur du logement (101).

**20.** Procédé selon la revendication 19, dans lequel l'étape pour placer le composant à base de fibre optique (200) à l'intérieur du logement (101) comprend une étape pour placer ledit composant à base de fibre optique (200) dans une configuration qui évite les contacts entre les différentes parties du composant à base de fibre optique (200).

**21.** Procédé selon la revendication 19, dans lequel l'étape pour placer le composant à base de fibre optique (200) à l'intérieur du logement (101) comprend une étape pour placer ledit composant à base de fibre optique (200) dans une configuration spirale.

**22.** Procédé selon la revendication 21, dans lequel ladite configuration spirale présente un écartement supérieure ou égal au diamètre maximum du composant à base de fibre optique (200).

**23.** Procédé selon la revendication 21, dans lequel ladite configuration spirale présente un écartement approximativement égale à 1,5 fois le diamètre maximum du composant à base de fibre optique (200).

**24.** Procédé selon la revendication 19, dans lequel l'étape de fermeture comprend une étape pour insérer une quantité de composé protecteur dans le logement (101).

**25.** Procédé selon la revendication 19, dans lequel la fonction de transfert est associée à un spectre de réflectivité prédéterminé.

**26.** Procédé selon la revendication 25, dans lequel, à l'étape pour placer le composant à base de fibre optique (200) à l'intérieur du logement (101), ledit spectre de réflectivité subit une variation inférieur à 0.5dB.

**27.** Procédé selon la revendication 26, dans lequel, à l'étape pour placer le composant à base de fibre optique (200) à l'intérieure du logement (101), ledit spectre de réflectivité subit une variation inférieur à 0.2dB.

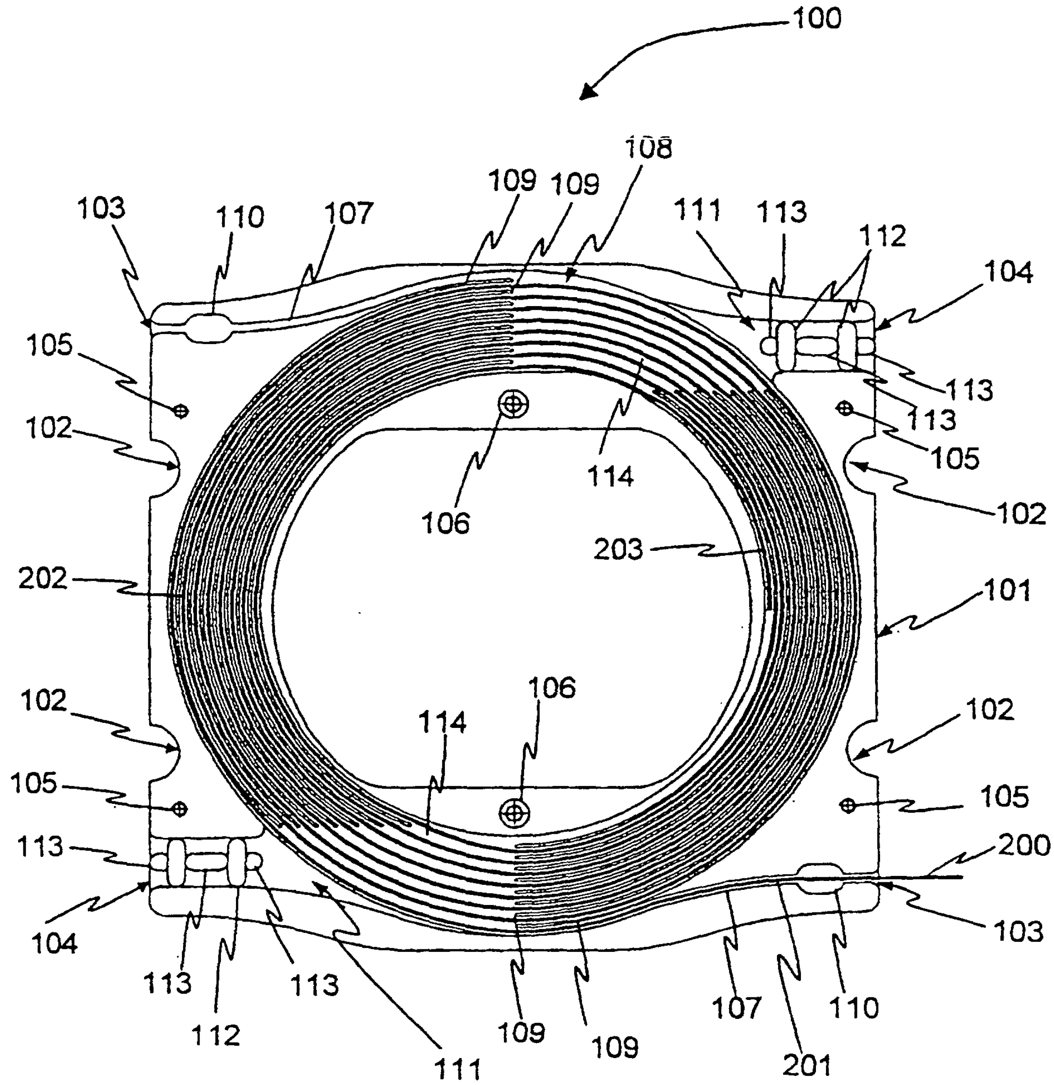
100
108
109 109
103
110
107
111
113
112
104
105
113
113
102
106
114
105
102
202
203
101
102
106
114
102
105
105
113
200
104
103
113
112
113
111
109
109
107
110
201

FIG. 1

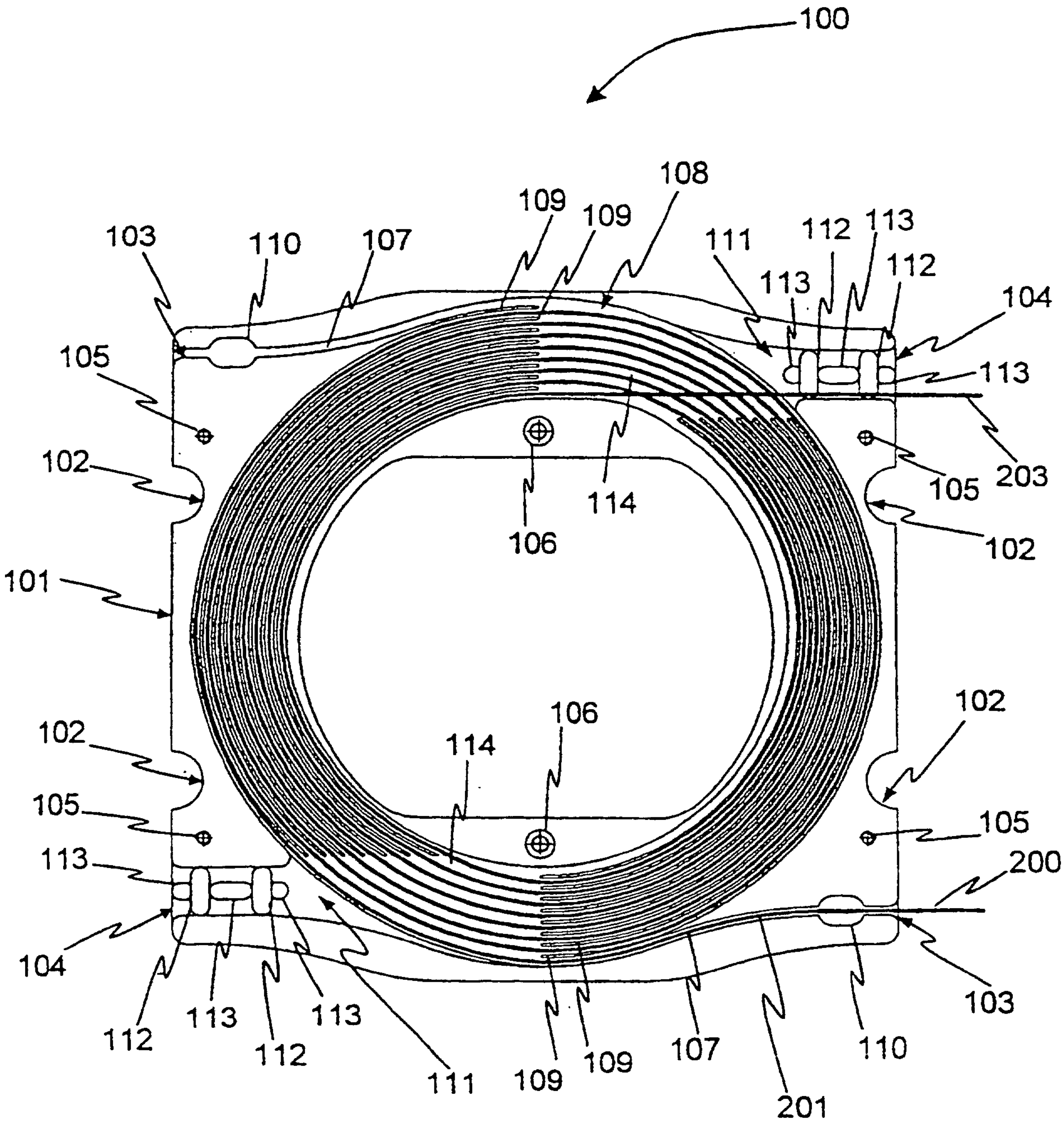
100
103
110
107
109
109
108
111
112
113
113
112
104
105
113
102
203
105
106
114
102
101
102
106
114
102
105
105
113
200
104
103
112
113
112
113
111
109
109
107
110
201

FIG. 2

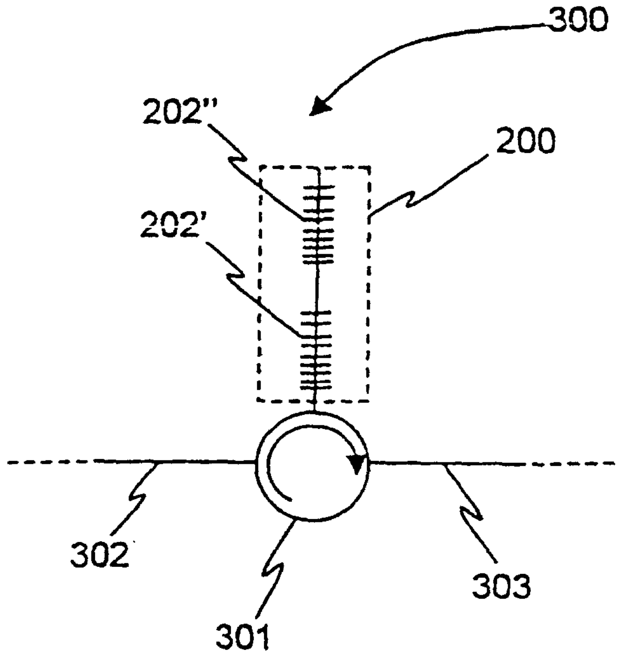
300
202"
200
202'
302
301
303

FIG. 3a

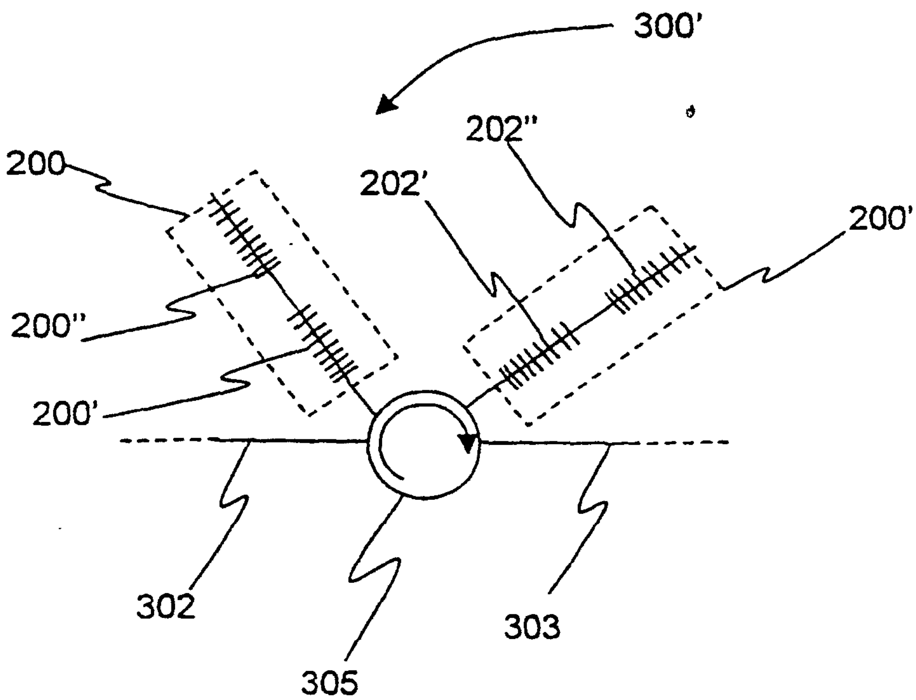
300'
202"
200
202'
200'
200"
200'
302
305
303

FIG. 3b

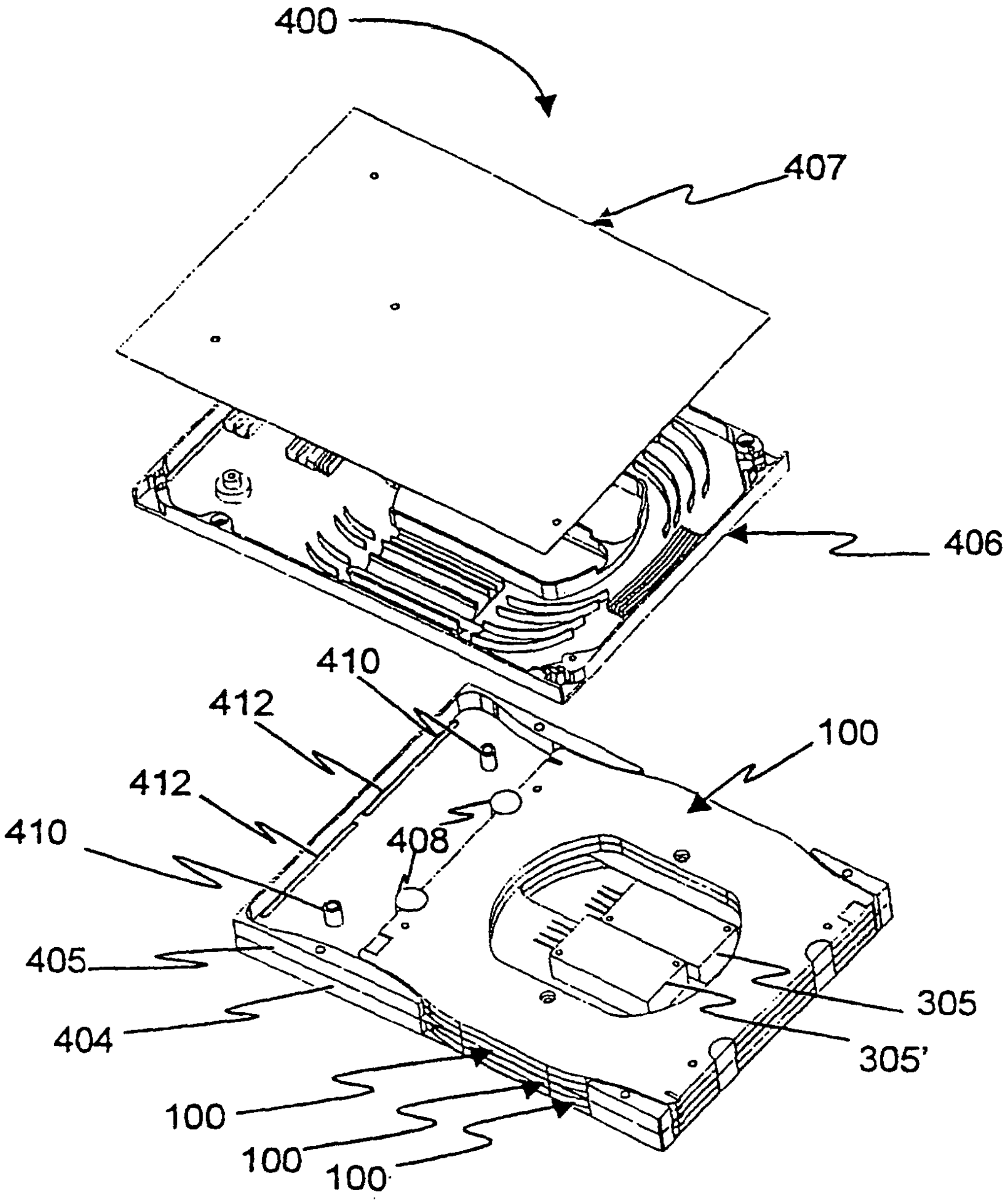


FIG. 4

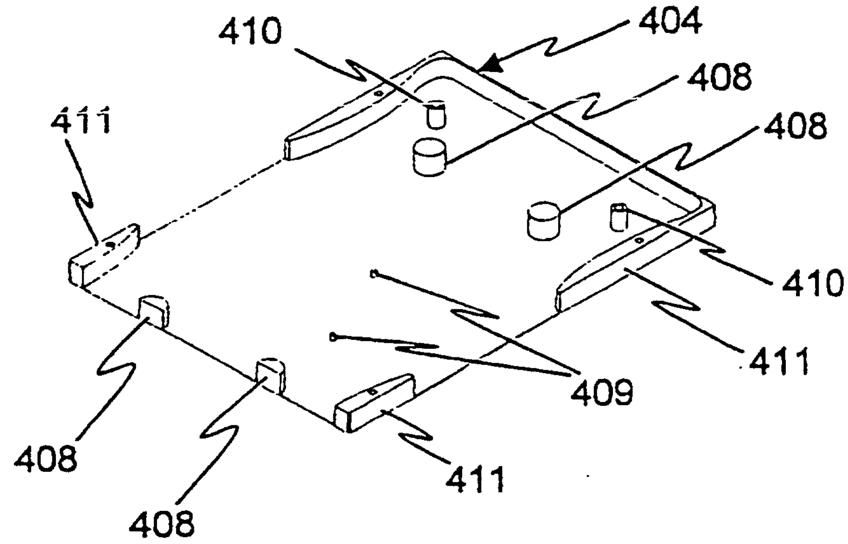
404
410
408
411
408
410
411
409
408
408
411

FIG. 5a

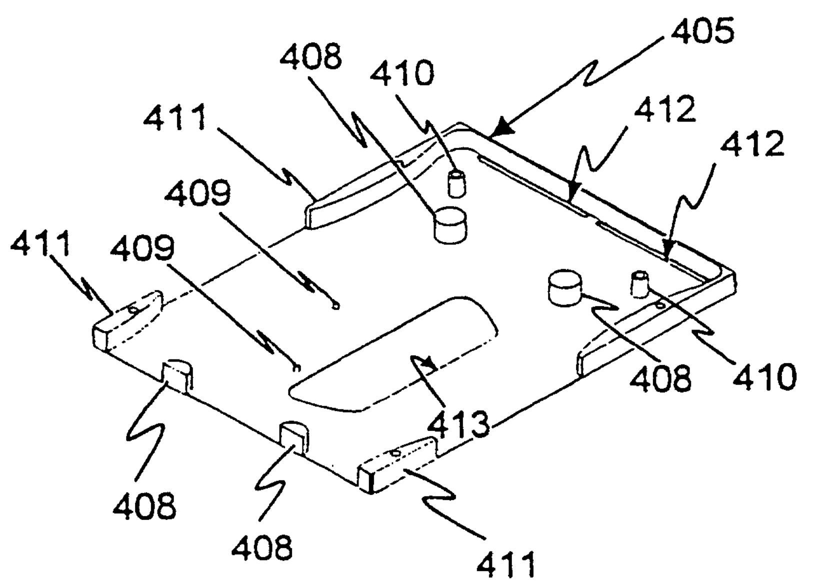
405
408
410
411
412
412
409
411
409
408
410
413
408
408
411

FIG. 5b

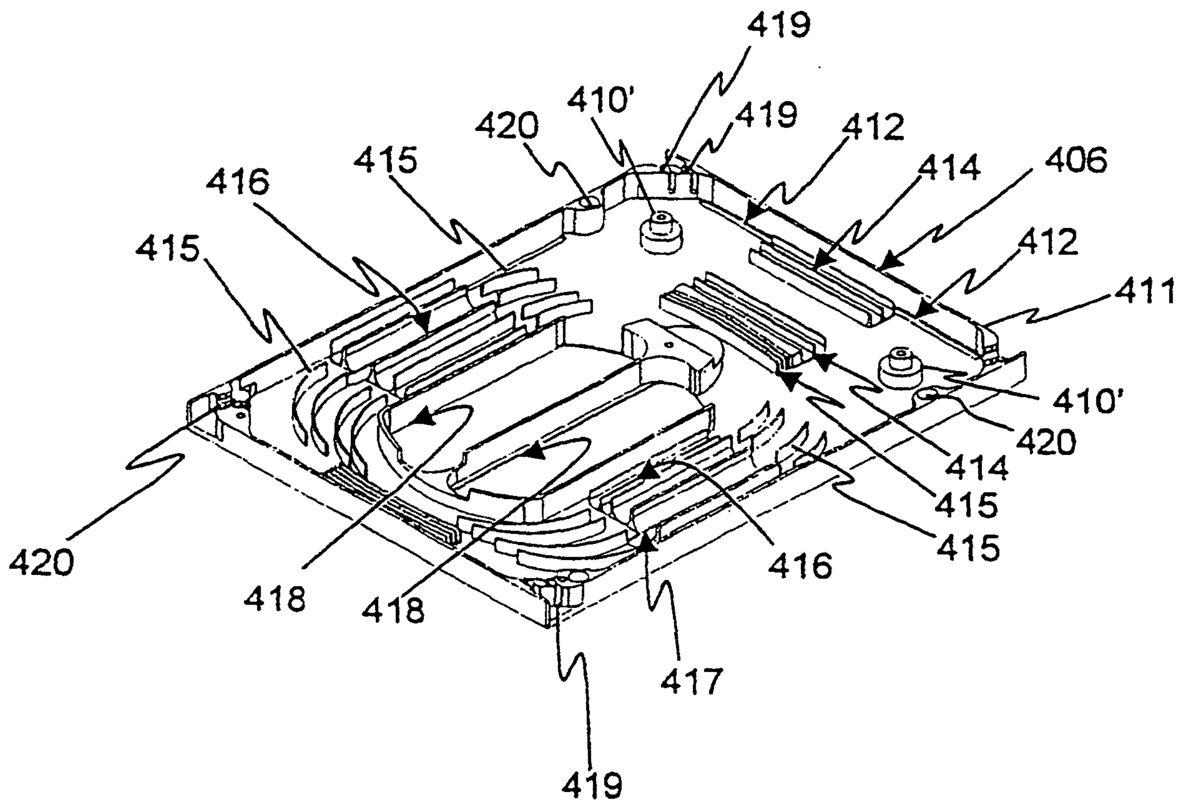
419
410'
419
420
412
415
414
406
416
412
415
411
410'
420
414
415
420
415
416
418
418
417
419

FIG. 5c

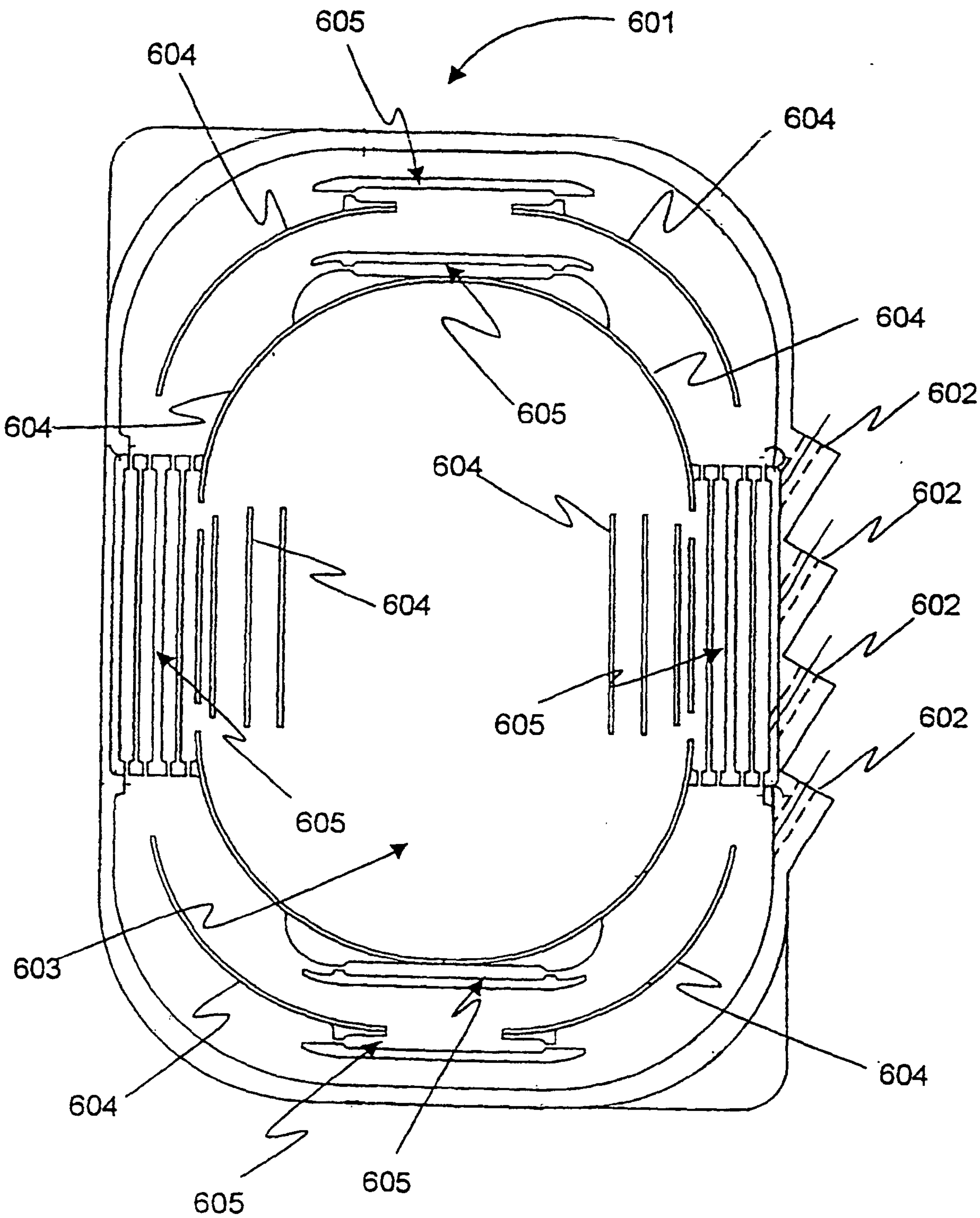
601
605
604
604
604
605
604
602
604
602
604
602
605
605
602
603
604
604
605
605

FIG. 6

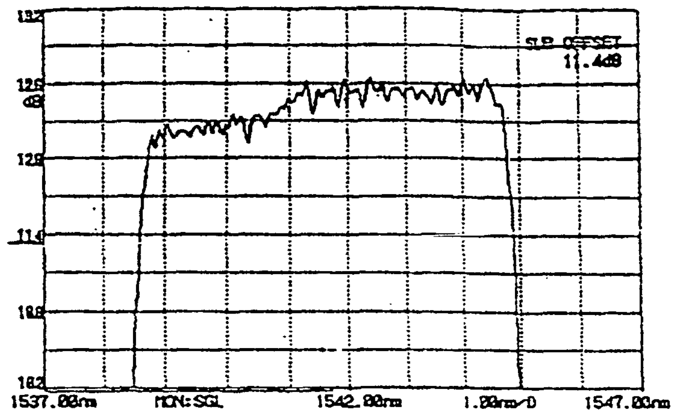


FIG. 7a

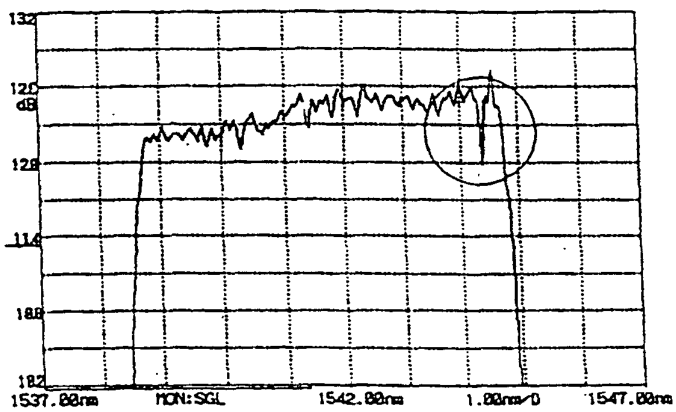


FIG. 7b

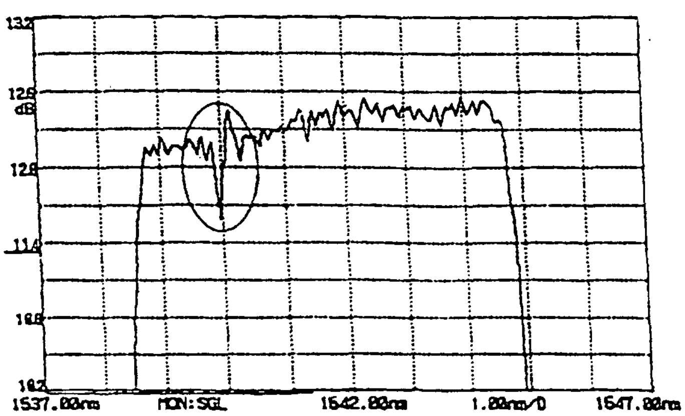


FIG. 7c

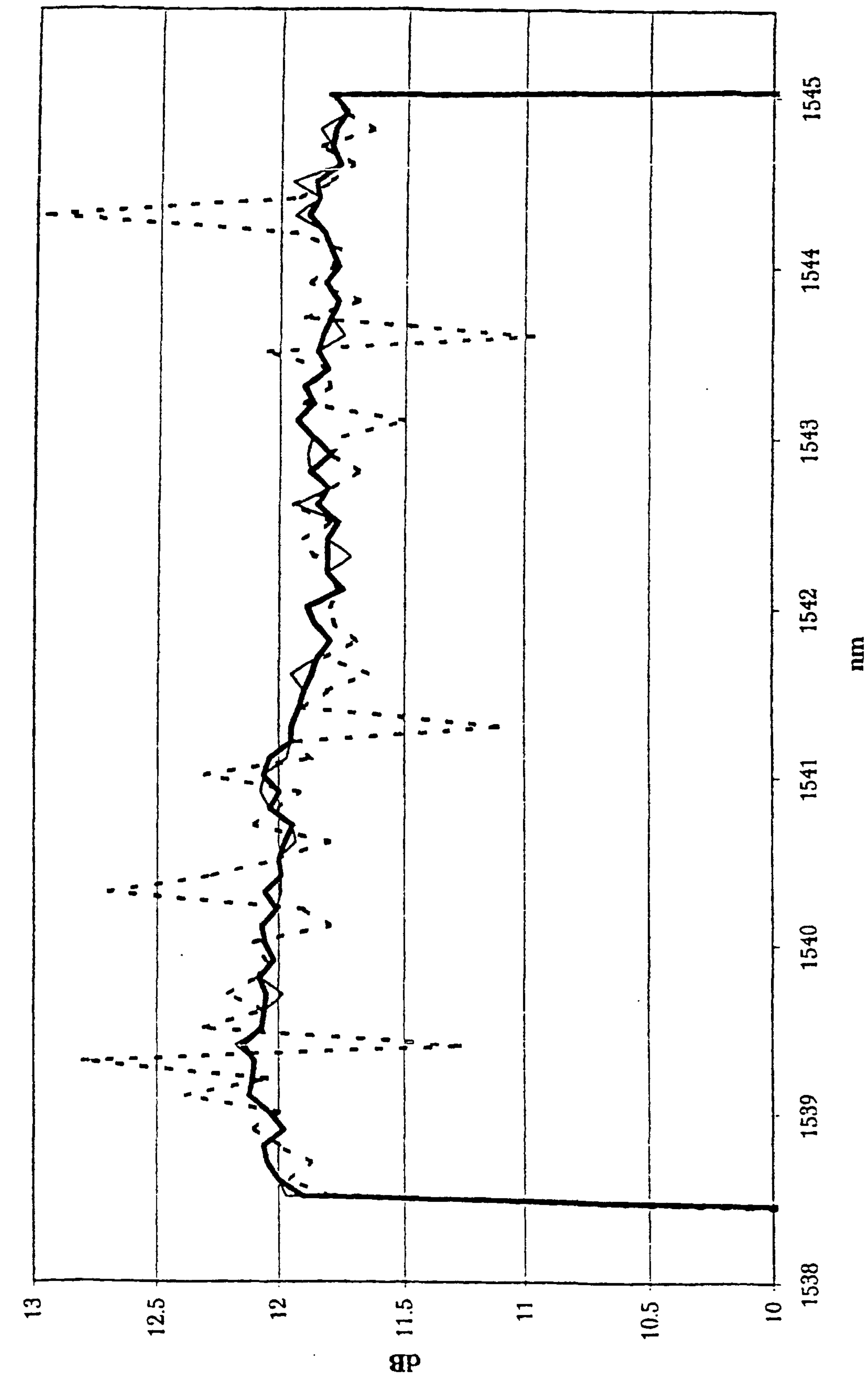
13
12.5
12
11.5
11
10.5
10
dB
1538
1539
1540
1541
1542
1543
1544
1545
nm

FIG. 8

FIG. 9

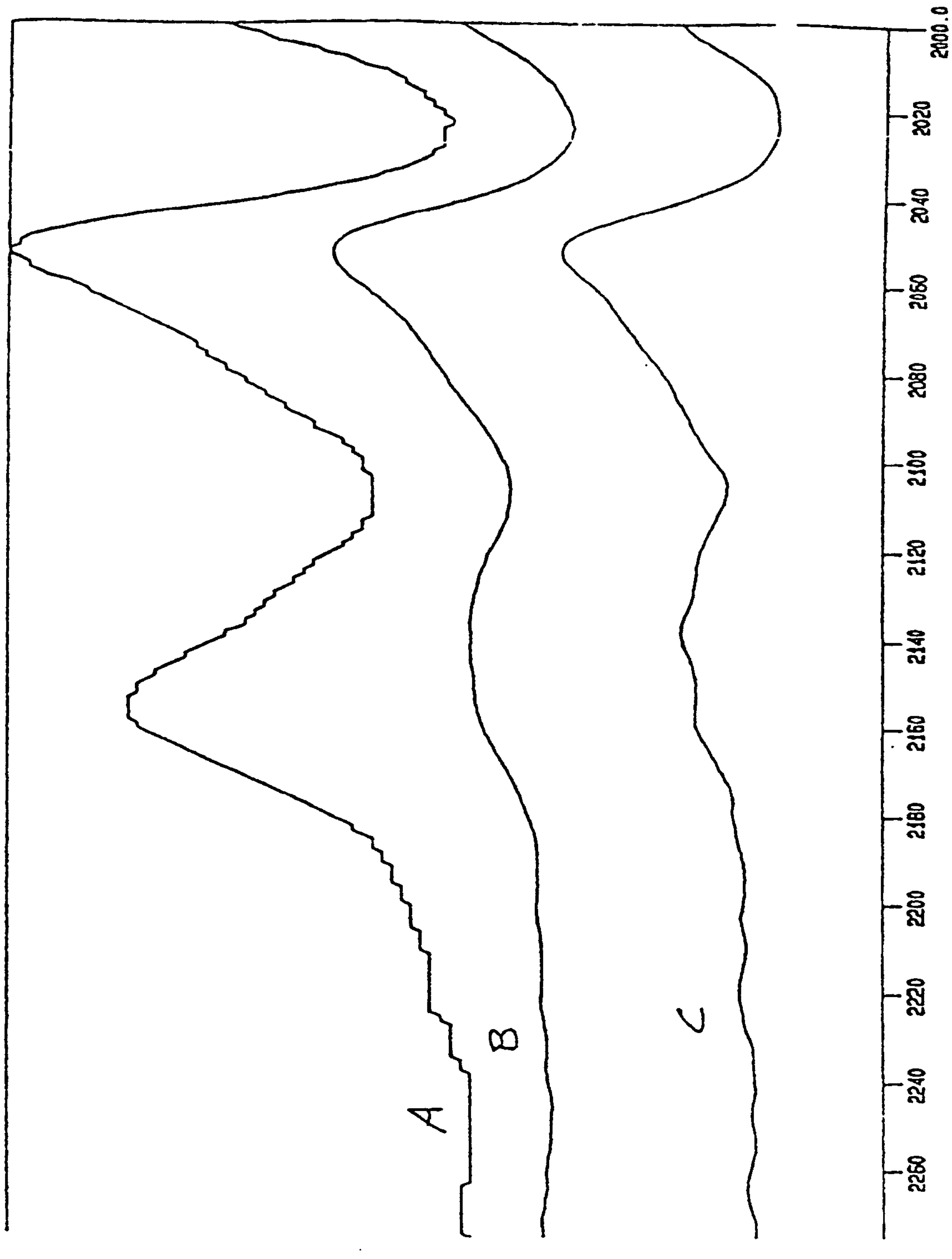
2000.0
2020
2040
2060
2080
2100
2120
2140
2160
2180
2200
2220
2240
2260
A
B
C